# EUROPÄISCHE PATENTSCHRIFT

(11) **EP 3 772 938 B1**
(45) Veröffentlichungstag und Bekanntmachung des Hinweises auf die Patenterteilung: **13.08.2025**
(21) Anmeldenummer: 19716425.4
(22) Anmeldetag: 12.04.2019
(51) Int. Cl.: A01N 25/00, A01N 43/90, A01N 43/34, A01P 5/00, A01P 7/02, A01P 7/04

(54) **VERWENDUNG EINES TETRAMSÄUREDERIVATES ZUR BEKÄMPFUNG VON TIERISCHEN SCHÄDLINGEN DURCH TRÖPFCHENAPPLIKATION**
USE OF A TETRAMIC ACID DERIVATIVE FOR COMBATING ANIMAL DISEASES THROUGH DRIP APPLICATION
UTILISATION D'UN DÉRIVÉ D'ACIDES TÉTRAMIQUES POUR LUTTER CONTRE LES PARASITES PAR APPLICATION GOUTTE-À-GOUTTE

(30) Priorität: 13.04.2018 EP 18167174
(43) Veröffentlichungstag der Anmeldung: 17.02.2021
(73) Patentinhaber: Bayer CropScience Aktiengesellschaft, 40789 Monheim am Rhein (DE); Bayer Aktiengesellschaft, 51373 Leverkusen (DE)
(72) Erfinder: FISCHER, Reiner, 40789 Monheim (DE); HAAS, Matthias, 42799 Leichlingen (DE); PITTA, Leonardo, 51371 Leverkusen (DE); SCHRADER, Elke, 40789 Monheim (DE); WECKWERT, Holger, 42799 Leichlingen (DE); RECKMANN, Udo, 63454 Hanau (DE)
(74) Vertreter: BIP Patents
(86) Internationale Anmeldenummer: PCT/EP2019/059430
(87) Internationale Veröffentlichungsnummer: WO 2019/197612

(56) Entgegenhaltungen:
- EP-A1- 2 020 413
- EP-A1- 2 071 952
- EP-A1- 2 103 615
- WO-A1-03/029213
- WO-A1-2008/067911
- WO-A1-2009/007036
- WO-A1-2010/063670
- WO-A1-2018/024659
- WO-A2-2006/089633
- WO-A2-2007/126691
- WO-A2-2008/037373
- DE-A1- 19 749 720
- KOLANTHASAMY ELANGO ET AL: "DRIP IRRIGATION OF PESTICIDES AS A PEST MANAGEMENT TOOL", CONFERENCE: NATIONAL CONGRESS ON "NEW CHALLENGES AND ADVANCES IN SUSTAINABLE MICRO IRRIGATION", 1 March 2017 (2017-03-01), India, pages 1 - 9, XP093003994, Retrieved from the Internet <URL:https://www.researchgate.net/profile/Elango-Kolanthasamy/publication/321309962_DRIP_IRRIGATION_OF_PESTICIDES_AS_A_PEST_MANAGEMENT_TOOL/links/5a1be866a6fdcc50adeca374/DRIP-IRRIGATION-OF-PESTICIDES-AS-A-PEST-MANAGEMENT-TOOL.pdf>
- DATABASE WPI Week 201827, Derwent World Patents Index; AN 2018-24489R, XP002781669

## Beschreibung

Die vorliegende Erfindung betrifft die Verwendung von bestimmten Tetramsäurederivaten zur Bekämpfung von tierischen Schädlingen wie Insekten und/oder Spinnmilben und/oder Nematoden durch Tröpfchenapplikation.

NH-Tetramsäurederivate als Pflanzenschutzmittel sind z. B. bekannt aus (EP-A-442 073) sowie 1H-Arylpyrrolidin-dion-Derivate aus (EP-A-456 063, EP-A-521 334, EP-A-596 298, EP-A-613 884, EP-A-613 885, WO 95/01 971, WO 95/26 954, WO 95/20 572, EP-A-0 668 267, WO 96/25 395, WO 96/35 664, WO 97/01535, WO 97/02 243, WO 97/36 868, WO 97/43275, WO 98/05638, WO 98/06721, WO 98/25928, WO 99/24437, WO 99/43649, WO 99/48869, WO 99/55673, WO 01/17972, WO 01/23354, WO 01/74770, WO 03/013249, WO 03/062244, WO 2004/007448, WO 2004/024 688, WO 04/065366, WO 04/080962, WO 04/111042, WO 05/044791, WO 05/044796, WO 05/048710, WO 05/049569, WO 05/066125, WO 05/092897, WO 06/000355, WO 06/029799, WO 06/056281, WO 06/056282, WO 06/089633, WO 07/048545, DEA 102 00505 9892, WO 07/073856, WO 07/096058, WO 07/121868, WO 07/140881, WO 08/067873, WO 08/067910, WO 08/067911, WO 08/138551, WO 09/015801, WO09/039975, WO 09/049851, WO 09/115262, WO10/052161, WO 10/102758, WO10/066378, WO10/063570). Außerdem sind ketalsubstituierte 1-H-Arylpyrrolidin-2,4-dione aus WO 99/16748 und (spiro)-ketalsubstituierte N-Alkoxy-alkoxy-substituierte Aryl-pyrrolidindione aus JP-A-14 205 984 und Ito M. et al. Bioscience, Biotechnology and Biochemistry 67, 1230-1238, (2003) bekannt.

Weiterhin ist die Verwendung von bestimmten Tetramsäurederivaten zur Bekämpfung von tierischen Schädlingen durch Angießen, Tröpfchenapplikation, Tauchapplikation oder Bodeninjektion z. B. aus WO 07/126691 bekannt. Für die aus der WO 07/126691 bekannten Verbindungen ist die Pflanzenverträglichkeit und/oder die insektizide Wirksamkeit jedoch nicht immer ausreichend. Darüber hinaus ist eine Blattlauswirkung nach hydroponischer Anwendung und Angießen z.B. aus WO 06/089633 bekannt geworden.

Kolanthasamy Elango ET AL: "DRIP IRRIGATION OF PESTICIDES AS A PEST MANAGEMENT TOOL", Conference: National Congress on "New Challenges and Advances in Sustainable Micro Irrigation", 1. März 2017 (2017-03-01), Seiten 1-9, India, Gefunden im Internet: URL:https://www.researchgate.netlprofilelElango-Kolanthasamylpublication1321309962 DRIP IRRIGATION OF PESTICIDES AS A PEST MANAGEMENT TOOL/links/5a1 be866a6fdcc5Oadeca374/D RI P-IR RIGATION-OFPESTICIDES-AS-A-PEST-MANAGEMENT-TOOL.pdf offenbaren, dass es sich bei der Tröpfchenapplikation von Pestiziden um eine allgemein bekannte Maßnahme handelt, die unter anderem deswegen von Vorteil ist, da der Einsatz an Pestiziden in den meisten Pflanzen gegenüber anderen Maßnahmen verringert werden kann.

Überraschenderweise wurde nun gefunden, dass bestimmte Tetramsäurederivate nicht nur gegen Blattläuse nach Angießen auf den Boden (in Fachkreisen als "Drenching" bekannt) sondern auch gut zur Bekämpfung von andersartigen Insekten und/oder Spinnmilben und/oder Nematoden nach Tröpfchenapplikation auf den Boden (in Fachkreisen als "Drip application" bekannt) geeignet sind.

Die vorliegende Erfindung betrifft demnach die Verwendung von einer Verbindung der Formel (I-2) gemäss Anspruch 1 zur Bekämpfung

von Insekten und/oder Spinnmilben und/oder Nematoden in Bewässerungssystemen als Tröpfchenapplikation auf den Boden. Weiterhin betrifft die vorliegende Erfindung diese Anwendungsformen auf natürlichen (Erdreich) oder artifiziellen Substraten (z.B. Steinwolle, Glaswolle, Quarzsand, Kiesel, Blähton, Vermiculit) im Freiland oder in geschlossenen Systemen (z.B. Gewächshäuser oder unter Folien-Abdeckung); in einjährigen (z.B. Baumwolle, Sojabohnen, Tabak, Gemüse, Gewürzen, Zierpflanzen) oder mehrjährigen Kulturen (z.B. Zitruspflanzen, Obst, tropische Kulturen, Gewürzen, Nüsse, Wein, Koniferen und Zierpflanzen).

Ausgenommen von der Erfindung ist die Verwendung von speziellen Tetramsäurederivaten zur Bekämpfung von Myzus persicae in Kohlgemüse sowie Aphis gossypii in Baumwolle durch Angiessen auf den Boden (WO 06/089633).

Unter dem Begriff "Boden" wird sowohl natürliches Wachstumssubstrat (Erdreich; Bodenerde) als auch artifizielles Wachstumssubstrat (z.B. Steinwolle, Glaswolle, Quarzsand, Kiesel, Blähton, Vermiculit) verstanden.

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Melonen, Kartoffeln, Bohnen wie z.B. Ackerbohnen, Carioca-Bohnen, Stangenbohnen, Buschbohnen; Erbsen, Artischocken, Mais;
aber auch Blattgemüse, beispielsweise Kopfsalat, Chicoreé, Endivien, Kressen, Rauken, Feldsalat, Eisbergsalat, Lauch, Spinat, Mangold;
weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;
ferner Kohlgemüse, wie Blumenkohl, Broccoli, Kohlrabi, Rotkohl, Weißkohl, Grünkohl, Wirsing, Rosenkohl, Chinakohl;
außerdem Baumwolle, Soja und Tabak.

Hinsichtlich der Anwendung versteht man unter mehrjährigen Kulturen Zitrus, wie beispielsweise Orangen, Grapefruits, Mandarinen, Zitronen, Limetten, Bitterorangen, Kumquats, Satsumas;
aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen;
weiterhin Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven,
außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse,
darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amyrillis, Dahlien, Azaleen, Malven,
aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien,
ferner z.B. Sträucher und Koniferen wie beispielsweise Ficus, Rhododendron, Fichten, Tannen, Kiefern, Eiben, Wacholder, Pinien, Oleander.

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koriander, Safran, Ingwer.

Bei den Tetramsäurederivaten handelt es sich um eine Verbindung der Formel (I) 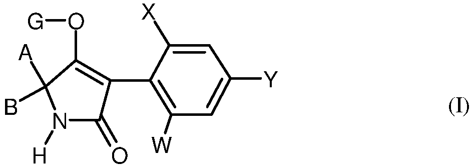 in welcher die Reste die folgende Bedeutung haben:

| **Bsp.-Nr.** | **W** | **X** | **Y** | **A** | **B** | **G** | **bekannt aus** WO 06/089633**; Bsp.-Nr.** |
|---|---|---|---|---|---|---|---|
| I-2 | CH₃ | CH₃ | Cl | 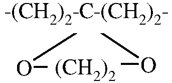 | | H | I-1-a-4 |

Die erfindungsgemäße Anwendung der Tetramsäurederivate kann allein, aber auch in Kombination mit anderen Insektiziden und/oder akariziden Wirkstoffen und/oder Nematiziden erfolgen.

### Verfahren und Verwendungen

Die Erfindung betrifft die Verwendung der Verbindung der Formel (I-2) als Schädlingsbekämpfungsmittel, insbesondere als Pflanzenschutzmittel, durch Tröpfchenapplikation.

Im Rahmen der vorliegenden Anmeldung umfasst der Begriff Schädlingsbekämpfungsmittel immer auch den Begriff Pflanzenschutzmittel.

Die Verbindungen der Formel (I) eignen sich bei guter Pflanzenverträglichkeit, günstiger Warmblütertoxizität und guter Umweltverträglichkeit zum Schutz von Pflanzen und Pflanzenorganen zur Steigerung der Ernteerträge, Verbesserung der Qualität des Erntegutes und zur Bekämpfung von tierischen Schädlingen, insbesondere Insekten, Spinnentieren und Nematoden, die in der Landwirtschaft, im Gartenbau, in Forsten und in Gärten und Freizeiteinrichtungen vorkommen. Sie können vorzugsweise als Schädlingsbekämpfungsmittel eingesetzt werden. Sie sind gegen normal sensible und resistente Arten sowie gegen alle oder einzelne Entwicklungsstadien wirksam. Zu den oben erwähnten Schädlingen gehören:
Schädlinge aus dem Stamm der Arthropoda, insbesondere aus der Klasse der Arachnida z. B. Acarus spp., z. B. Acarus siro, Aceria kuko, Aceria sheldoni, Aculops spp., Aculus spp., z. B. Aculus fockeui, Aculus schlechtendali, Amblyomma spp., Amphitetranychus viennensis, Argas spp., Boophilus spp., Brevipalpus spp., z. B. Brevipalpus phoenicis, Bryobia graminum, Bryobia praetiosa, Centruroides spp., Chorioptes spp., Dermanyssus gallinae, Dermatophagoides pteronyssinus, Dermatophagoides farinae, Dermacentor spp., Eotetranychus spp., z. B. Eotetranychus hicoriae, Epitrimerus pyri, Eutetranychus spp., z. B. Eutetranychus banksi, Eriophyes spp., z. B. Eriophyes pyri, Glycyphagus domesticus, Halotydeus destructor, Hemitarsonemus spp., z. B. Hemitarsonemus latus (=Polyphagotarsonemus latus), Hyalomma spp., Ixodes spp., Latrodectus spp., Loxosceles spp., Neutrombicula autumnalis, Nuphersa spp., Oligonychus spp., z. B. Oligonychus coffeae, Oligonychus coniferarum, Oligonychus ilicis, Oligonychus indicus, Oligonychus mangiferus, Oligonychus pratensis, Oligonychus punicae, Oligonychus yothersi, Ornithodorus spp., Ornithonyssus spp., Panonychus spp., z. B. Panonychus citri (=Metatetranychus citri), Panonychus ulmi (=Metatetranychus ulmi), Phyllocoptruta oleivora, Platytetranychus multidigituli, Polyphagotarsonemus latus, Psoroptes spp., Rhipicephalus spp., Rhizoglyphus spp., Sarcoptes spp., Scorpio maurus, Steneotarsonemus spp., Steneotarsonemus spinki, Tarsonemus spp., z. B. Tarsonemus confusus, Tarsonemus pallidus, Tetranychus spp., z. B. Tetranychus canadensis, Tetranychus cinnabarinus, Tetranychus turkestani, Tetranychus urticae, Trombicula alfreddugesi, Vaejovis spp., Vasates lycopersici;
aus der Ordnung der Coleoptera z. B. Acalymma vittatum, Acanthoscelides obtectus, Adoretus spp., Aethina tumida, Agelastica alni, Agrilus spp., z. B. Agrilus planipennis, Agrilus coxalis, Agrilus bilineatus, Agrilus anxius, Agriotes spp., z. B. Agriotes linneatus, Agriotes mancus, Alphitobius diaperinus, Amphimallon solstitialis, Anobium punctatum, Anoplophora spp., z. B. Anoplophora glabripennis, Anthonomus spp., z. B. Anthonomus grandis, Anthrenus spp., Apion spp., Apogonia spp., Atomaria spp., z. B. Atomaria linearis, Attagenus spp., Baris caerulescens, Bruchidius obtectus, Bruchus spp., z. B. Bruchus pisorum, Bruchus rufimanus, Cassida spp., Cerotoma trifurcata, Ceutorrhynchus spp., z. B. Ceutorrhynchus assimilis, Ceutorrhynchus quadridens, Ceutorrhynchus rapae, Chaetocnema spp., z. B. Chaetocnema confinis, Chaetocnema denticulata, Chaetocnema ectypa, Cleonus mendicus, Conoderus spp., Cosmopolites spp., z. B. Cosmopolites sordidus, Costelytra zealandica, Ctenicera spp., Curculio spp., z. B. Curculio caryae, Curculio caryatrypes, Curculio obtusus, Curculio sayi, Cryptolestes ferrugineus, Cryptolestes pusillus, Cryptorhynchus lapathi, Cryptorhynchus mangiferae, Cylindrocopturus spp., Cylindrocopturus adspersus, Cylindrocopturus furnissi, Dendroctonus spp., z. B. Dendroctonus ponderosae, Dermestes spp., Diabrotica spp., z. B. Diabrotica balteata, Diabrotica barberi, Diabrotica undecimpunctata howardi, Diabrotica undecimpunctata undecimpunctata, Diabrotica virgifera virgifera, Diabrotica virgifera zeae, Dichocrocis spp., Dicladispa armigera, Diloboderus spp., Epicaerus spp., Epilachna spp., z. B. Epilachna borealis, Epilachna varivestis, Epitrix spp., z. B. Epitrix cucumeris, Epitrix fuscula, Epitrix hirtipennis, Epitrix subcrinita, Epitrix tuberis, Faustinus spp., Gibbium psylloides, Gnathocerus cornutus, Hellula undalis, Heteronychus arator, Heteronyx spp., Hylamorpha elegans, Hylotrupes bajulus, Hypera postica, Hypomeces squamosus, Hypothenemus spp., z. B. Hypothenemus hampei, Hypothenemus obscurus, Hypothenemus pubescens, Lachnosterna consanguinea, Lasioderma serricorne, Latheticus oryzae, Lathridius spp., Lema spp., Leptinotarsa decemlineata, Leucoptera spp., z. B. Leucoptera coffeella, Limonius ectypus, Lissorhoptrus oryzophilus, Listronotus (=Hyperodes) spp., Lixus spp., Luperodes spp., Luperomorpha xanthodera, Lyctus spp., Megacyllene spp., z. B. Megacyllene robiniae, Megascelis spp., Melanotus spp., z. B. Melanotus longulus oregonensis, Meligethes aeneus, Melolontha spp., z. B. Melolontha melolontha, Migdolus spp., Monochamus spp., Naupactus xanthographus, Necrobia spp., Neogalerucella spp., Niptus hololeucus, Oryctes rhinoceros, Oryzaephilus surinamensis, Oryzaphagus oryzae, Otiorhynchus spp., z. B. Otiorhynchus cribricollis, Otiorhynchus ligustici, Otiorhynchus ovatus, Otiorhynchus rugosostriarus, Otiorhynchus sulcatus, Oulema spp., z. B. Oulema melanopus, Oulema oryzae, Oxycetonia jucunda, Phaedon cochleariae, Phyllophaga spp., Phyllophaga helleri, Phyllotreta spp., z. B. Phyllotreta armoraciae, Phyllotreta pusilla, Phyllotreta ramosa, Phyllotreta striolata, Popillia japonica, Premnotrypes spp., Prostephanus truncatus, Psylliodes spp., z. B. Psylliodes affinis, Psylliodes chrysocephala, Psylliodes punctulata, Ptinus spp., Rhizobius ventralis, Rhizopertha dominica, Rhynchophorus spp., Rhynchophorus ferrugineus, Rhynchophorus palmarum, Scolytus spp., z. B. Scolytus multistriatus, Sinoxylon perforans, Sitophilus spp., z. B. Sitophilus granarius, Sitophilus linearis, Sitophilus oryzae, Sitophilus zeamais, Sphenophorus spp., Stegobium paniceum, Sternechus spp., z. B. Sternechus paludatus, Symphyletes spp., Tanymecus spp., z. B. Tanymecus dilaticollis, Tanymecus indicus, Tanymecus palliatus, Tenebrio molitor, Tenebrioides mauretanicus, Tribolium spp., z. B. Tribolium audax, Tribolium castaneum, Tribolium confusum, Trogoderma spp., Tychius spp., Xylotrechus spp., Zabrus spp., z. B. Zabrus tenebrioides;
aus der Ordnung der Diptera z. B. Aedes spp., z. B. Aedes aegypti, Aedes albopictus, Aedes sticticus, Aedes vexans, Agromyza spp., z. B. Agromyza frontella, Agromyza parvicornis, Anastrepha spp., Anopheles spp., z. B. Anopheles quadrimaculatus, Anopheles gambiae, Asphondylia spp., Bactrocera spp., z. B. Bactrocera cucurbitae, Bactrocera dorsalis, Bactrocera oleae, Bibio hortulanus, Calliphora erythrocephala, Calliphora vicina, Ceratitis capitata, Chironomus spp., Chrysomya spp., Chrysops spp., Chrysozona pluvialis, Cochliomya spp., Contarinia spp., z. B. Contarinia johnsoni, Contarinia nasturtii, Contarinia pyrivora, Contarinia schulzi, Contarinia sorghicola, Contarinia tritici, Cordylobia anthropophaga, Cricotopus sylvestris, Culex spp., z. B. Culex pipiens, Culex quinquefasciatus, Culicoides spp., Culiseta spp., Cuterebra spp., Dacus oleae, Dasineura spp., z. B. Dasineura brassicae, Delia spp., z. B. Delia antiqua, Delia coarctata, Delia florilega, Delia platura, Delia radicum, Dermatobia hominis, Drosophila spp., z. B. Drosphila melanogaster, Drosophila suzukii, Echinocnemus spp., Euleia heraclei, Fannia spp., Gasterophilus spp., Glossina spp., Haematopota spp., Hydrellia spp., Hydrellia griseola, Hylemya spp., Hippobosca spp., Hypoderma spp., Liriomyza spp., z. B. Liriomyza brassicae, Liriomyza huidobrensis, Liriomyza sativae, Lucilia spp., z. B. Lucilia cuprina, Lutzomyia spp., Mansonia spp., Musca spp., z. B. Musca domestica, Musca domestica vicina, Oestrus spp., Oscinella frit, Paratanytarsus spp., Paralauterborniella subcincta, Pegomya oder Pegomyia spp., z. B. Pegomya betae, Pegomya hyoscyami, Pegomya rubivora, Phlebotomus spp., Phorbia spp., Phormia spp., Piophila casei, Platyparea poeciloptera, Prodiplosis spp., Psila rosae, Rhagoletis spp., z. B. Rhagoletis cingulata, Rhagoletis completa, Rhagoletis fausta, Rhagoletis indifferens, Rhagoletis mendax, Rhagoletis pomonella, Sarcophaga spp., Simulium spp., z. B. Simulium meridionale, Stomoxys spp., Tabanus spp., Tetanops spp., Tipula spp., z. B. Tipula paludosa, Tipula simplex, Toxotrypana curvicauda;
aus der Ordnung der Hemiptera z. B. Acizzia acaciaebaileyanae, Acizzia dodonaeae, Acizzia uncatoides, Acrida turrita, Acyrthosipon spp., z. B. Acyrthosiphon pisum, Acrogonia spp., Aeneolamia spp., Agonoscena spp., Aleurocanthus spp., Aleyrodes proletella, Aleurolobus barodensis, Aleurothrixus floccosus, Allocaridara malayensis, Amrasca spp., z. B. Amrasca bigutulla, Amrasca devastans, Anuraphis cardui, Aonidiella spp., z. B. Aonidiella aurantii, Aonidiella citrina, Aonidiella inornata, Aphanostigma piri, Aphis spp., z. B. Aphis citricola, Aphis craccivora, Aphis fabae, Aphis forbesi, Aphis glycines, Aphis gossypii, Aphis hederae, Aphis illinoisensis, Aphis middletoni, Aphis nasturtii, Aphis nerii, Aphis pomi, Aphis spiraecola, Aphis viburniphila, Arboridia apicalis, Arytainilla spp., Aspidiella spp., Aspidiotus spp., z. B. Aspidiotus nerii, Atanus spp., Aulacorthum solani, Bemisia tabaci, Blastopsylla occidentalis, Boreioglycaspis melaleucae, Brachycaudus helichrysi, Brachycolus spp., Brevicoryne brassicae, Cacopsylla spp., z. B. Cacopsylla pyricola, Calligypona marginata, Capulinia spp., Carneocephala fulgida, Ceratovacuna lanigera, Cercopidae, Ceroplastes spp., Chaetosiphon fragaefolii, Chionaspis tegalensis, Chlorita onukii, Chondracris rosea, Chromaphis juglandicola, Chrysomphalus aonidum, Chrysomphalus ficus, Cicadulina mbila, Coccomytilus halli, Coccus spp., z. B. Coccus hesperidum, Coccus longulus, Coccus pseudomagnoliarum, Coccus viridis, Cryptomyzus ribis, Cryptoneossa spp., Ctenarytaina spp., Dalbulus spp., Dialeurodes chittendeni, Dialeurodes citri, Diaphorina citri, Diaspis spp., Diuraphis spp., Doralis spp., Drosicha spp., Dysaphis spp., z. B. Dysaphis apiifolia, Dysaphis plantaginea, Dysaphis tulipae, Dysmicoccus spp., Empoasca spp., z. B. Empoasca abrupta, Empoasca fabae, Empoasca maligna, Empoasca solana, Empoasca stevensi, Eriosoma spp., z. B. Eriosoma americanum, Eriosoma lanigerum, Eriosoma pyricola, Erythroneura spp., Eucalyptolyma spp., Euphyllura spp., Euscelis bilobatus, Ferrisia spp., Fiorinia spp., Furcaspis oceanica, Geococcus coffeae, Glycaspis spp., Heteropsylla cubana, Heteropsylla spinulosa, Homalodisca coagulata, Hyalopterus arundinis, Hyalopterus pruni, Icerya spp., z. B. Icerya purchasi, Idiocerus spp., Idioscopus spp., Laodelphax striatellus, Lecanium spp., z. B. Lecanium corni (=Parthenolecanium corni), Lepidosaphes spp., z. B. Lepidosaphes ulmi, Lipaphis erysimi, Lopholeucaspis japonica, Lycorma delicatula, Macrosiphum spp., z. B. Macrosiphum euphorbiae, Macrosiphum lilii, Macrosiphum rosae, Macrosteles facifrons, Mahanarva spp., Melanaphis sacchari, Metcalfiella spp., Metcalfa pruinosa, Metopolophium dirhodum, Monellia costalis, Monelliopsis pecanis, Myzus spp., z. B. Myzus ascalonicus, Myzus cerasi, Myzus ligustri, Myzus ornatus, Myzus persicae, Myzus nicotianae, Nasonovia ribisnigri, Neomaskellia spp., Nephotettix spp., z. B. Nephotettix cincticeps, Nephotettix nigropictus, Nettigoniclla spectra, Nilaparvata lugens, Oncometopia spp., Orthezia praelonga, Oxya chinensis, Pachypsylla spp., Parabemisia myricae, Paratrioza spp., z. B. Paratrioza cockerelli, Parlatoria spp., Pemphigus spp., z. B. Pemphigus bursarius, Pemphigus populivenae, Peregrinus maidis, Perkinsiella spp., Phenacoccus spp., z. B. Phenacoccus madeirensis, Phloeomyzus passerinii, Phorodon humuli, Phylloxera spp., z. B. Phylloxera devastatrix, Phylloxera notabilis, Pinnaspis aspidistrae, Planococcus spp., z. B. Planococcus citri, Prosopidopsylla flava, Protopulvinaria pyriformis, Pseudaulacaspis pentagona, Pseudococcus spp., z. B. Pseudococcus calceolariae, Pseudococcus comstocki, Pseudococcus longispinus, Pseudococcus maritimus, Pseudococcus viburni, Psyllopsis spp., Psylla spp., z. B. Psylla buxi, Psylla mali, Psylla pyri, Pteromalus spp., Pulvinaria spp., Pyrilla spp., Quadraspidiotus spp., z. B. Quadraspidiotus juglansregiae, Quadraspidiotus ostreaeformis, Quadraspidiotus perniciosus, Quesada gigas, Rastrococcus spp., Rhopalosiphum spp., z. B. Rhopalosiphum maidis, Rhopalosiphum oxyacanthae, Rhopalosiphum padi, Rhopalosiphum rufiabdominale, Saissetia spp., z. B. Saissetia coffeae, Saissetia miranda, Saissetia neglecta, Saissetia oleae, Scaphoideus titanus, Schizaphis graminum, Selenaspidus articulatus, Sipha flava, Sitobion avenae, Sogata spp., Sogatella furcifera, Sogatodes spp., Stictocephala festina, Siphoninus phillyreae, Tenalaphara malayensis, Tetragonocephela spp., Tinocallis caryaefoliae, Tomaspis spp., Toxoptera spp., z. B. Toxoptera aurantii, Toxoptera citricidus, Trialeurodes vaporariorum, Trioza spp., z. B. Trioza diospyri, Typhlocyba spp., Unaspis spp., Viteus vitifolii, Zygina spp.;
aus der Unterordnung der Heteroptera z. B. Aelia spp., Anasa tristis, Antestiopsis spp., Boisea spp., Blissus spp., Calocoris spp., Campylomma livida, Cavelerius spp., Cimex spp., z. B. Cimex adjunctus, Cimex hemipterus, Cimex lectularius, Cimex pilosellus, Collaria spp., Creontiades dilutus, Dasynus piperis, Dichelops furcatus, Diconocoris hewetti, Dysdercus spp., Euschistus spp., z. B. Euschistus heros, Euschistus servus, Euschistus tristigmus, Euschistus variolarius, Eurydema spp., Eurygaster spp., Halyomorpha halys, Heliopeltis spp., Horcias nobilellus, Leptocorisa spp., Leptocorisa varicornis, Leptoglossus occidentalis, Leptoglossus phyllopus, Lygocoris spp., z. B. Lygocoris pabulinus, Lygus spp., z. B. Lygus elisus, Lygus hesperus, Lygus lineolaris, Macropes excavatus, Megacopta cribraria, Miridae, Monalonion atratum, Nezara spp., z. B. Nezara viridula, Nysius spp., Oebalus spp., Pentomidae, Piesma quadrata, Piezodorus spp., z. B. Piezodorus guildinii, Psallus spp., Pseudacysta persea, Rhodnius spp., Sahlbergella singularis, Scaptocoris castanea, Scotinophora spp., Stephanitis nashi, Tibraca spp., Triatoma spp.;
aus der Ordnung der Hymenoptera z. B. Acromyrmex spp., Athalia spp., z. B. Athalia rosae, Atta spp., Camponotus spp., Dolichovespula spp., Diprion spp., z. B. Diprion similis, Hoplocampa spp., z. B. Hoplocampa cookei, Hoplocampa testudinea, Lasius spp., Linepithema (Iridiomyrmex) humile, Monomorium pharaonis, Paratrechina spp., Paravespula spp., Plagiolepis spp., Sirex spp., z. B. Sirex noctilio, Solenopsis invicta, Tapinoma spp., Technomyrmex albipes, Urocerus spp., Vespa spp., z. B. Vespa crabro, Wasmannia auropunctata, Xeris spp.;
aus der Ordnung der Isopoda z. B. Armadillidium vulgare, Oniscus asellus, Porcellio scaber;
aus der Ordnung der Isoptera z. B. Coptotermes spp., z. B. Coptotermes formosanus, Cornitermes cumulans, Cryptotermes spp., Incisitermes spp., Kalotermes spp., Microtermes obesi, Nasutitermis spp., Odontotermes spp., Porotermes spp., Reticulitermes spp., z. B. Reticulitermes flavipes, Reticulitermes hesperus;
aus der Ordnung der Lepidoptera z. B. Achroia grisella, Acronicta major, Adoxophyes spp., z. B. Adoxophyes orana, Aedia leucomelas, Agrotis spp., z. B. Agrotis segetum, Agrotis ipsilon, Alabama spp., z. B. Alabama argillacea, Amyelois transitella, Anarsia spp., Anticarsia spp., z. B. Anticarsia gemmatalis, Argyroploce spp., Autographa spp., Barathra brassicae, Blastodacna atra, Borbo cinnara, Bucculatrix thurberiella, Bupalus piniarius, Busseola spp., Cacoecia spp., Caloptilia theivora, Capua reticulana, Carpocapsa pomonella, Carposina niponensis, Cheimatobia brumata, Chilo spp., z. B. Chilo plejadellus, Chilo suppressalis, Choreutis pariana, Choristoneura spp., Chrysodeixis chalcites, Clysia ambiguella, Cnaphalocerus spp., Cnaphalocrocis medinalis, Cnephasia spp., Conopomorpha spp., Conotrachelus spp., Copitarsia spp., Cydia spp., z. B. Cydia nigricana, Cydia pomonella, Dalaca noctuides, Diaphania spp., Diparopsis spp., Diatraea saccharalis, Dioryctria spp., z. B. Dioryctria zimmermani, Earias spp., Ecdytolopha aurantium, Elasmopalpus lignosellus, Eldana saccharina, Ephestia spp., z. B. Ephestia elutella, Ephestia kuehniella, Epinotia spp., Epiphyas postvittana, Erannis spp., Erschoviella musculana, Etiella spp., Eudocima spp., Eulia spp., Eupoecilia ambiguella, Euproctis spp., z. B. Euproctis chrysorrhoea, Euxoa spp., Feltia spp., Galleria mellonella, Gracillaria spp., Grapholitha spp., z. B. Grapholita molesta, Grapholita prunivora, Hedylepta spp., Helicoverpa spp., z. B. Helicoverpa armigera, Helicoverpa zea, Heliothis spp., z. B. Heliothis virescens , Hofmannophila pseudospretella, Homoeosoma spp., Homona spp., Hyponomeuta padella, Kakivoria flavofasciata, Lampides spp., Laphygma spp., Laspeyresia molesta, Leucinodes orbonalis, Leucoptera spp., z. B. Leucoptera coffeella, Lithocolletis spp., z. B. Lithocolletis blancardella, Lithophane antennata, Lobesia spp., z. B. Lobesia botrana, Loxagrotis albicosta, Lymantria spp., z. B. Lymantria dispar, Lyonetia spp., z. B. Lyonetia clerkella, Malacosoma neustria, Maruca testulalis, Mamestra brassicae, Melanitis leda, Mocis spp., Monopis obviella, Mythimna separata, Nemapogon cloacellus, Nymphula spp., Oiketicus spp., Omphisa spp., Operophtera spp., Oria spp., Orthaga spp., Ostrinia spp., z. B. Ostrinia nubilalis, Panolis flammea, Parnara spp., Pectinophora spp., z. B. Pectinophora gossypiella, Perileucoptera spp., Phthorimaea spp., z. B. Phthorimaea operculella, Phyllocnistis citrella, Phyllonorycter spp., z. B. Phyllonorycter blancardella, Phyllonorycter crataegella, Pieris spp., z. B. Pieris rapae, Platynota stultana, Plodia interpunctella, Plusia spp., Plutella xylostella (=Plutella maculipennis), Podesia spp., z. B. Podesia syringae, Prays spp., Prodenia spp., Protoparce spp., Pseudaletia spp., z. B. Pseudaletia unipuncta, Pseudoplusia includens, Pyrausta nubilalis, Rachiplusia nu, Schoenobius spp., z. B. Schoenobius bipunctifer, Scirpophaga spp., z. B. Scirpophaga innotata, Scotia segetum, Sesamia spp., z. B. Sesamia inferens, Sparganothis spp., Spodoptera spp., z. B. Spodoptera eradiana, Spodoptera exigua, Spodoptera frugiperda, Spodoptera praefica, Stathmopoda spp., Stenoma spp., Stomopteryx subsecivella, Synanthedon spp., Tecia solanivora, Thaumetopoea spp., Thermesia gemmatalis, Tinea cloacella, Tinea pellionella, Tineola bisselliella, Tortrix spp., Trichophaga tapetzella, Trichoplusia spp., z. B. Trichoplusia ni, Tryporyza incertulas, Tuta absoluta, Virachola spp.;
aus der Ordnung der Orthoptera oder Saltatoria z. B. Acheta domesticus, Dichroplus spp., Gryllotalpa spp., z. B. Gryllotalpa gryllotalpa, Hieroglyphus spp., Locusta spp., z. B. Locusta migratoria, Melanoplus spp., z. B. Melanoplus devastator, Paratlanticus ussuriensis, Schistocerca gregaria;
aus der Ordnung der Phthiraptera z. B. Damalinia spp., Haematopinus spp., Linognathus spp., Pediculus spp., Phylloxera vastatrix, Phthirus pubis, Trichodectes spp.;
aus der Ordnung der Thysanoptera z. B. Anaphothrips obscurus, Baliothrips biformis, Chaetanaphothrips leeuweni, Drepanothrips reuteri, Enneothrips flavens, Frankliniella spp., z. B. Frankliniella fusca, Frankliniella occidentalis, Frankliniella schultzei, Frankliniella tritici, Frankliniella vaccinii, Frankliniella williamsi, Haplothrips spp., Heliothrips spp., Hercinothrips femoralis, Kakothrips spp., Rhipiphorothrips cruentatus, Scirtothrips spp., Taeniothrips cardamomi, Thrips spp., z. B. Thrips palmi, Thrips tabaci;
Pflanzenschädlinge aus dem Stamm der Nematoda, d. h. pflanzenparasitäre Nematoden, insbesondere Aglenchus spp., z. B. Aglenchus agricola, Anguina spp., z. B. Anguina tritici, Aphelenchoides spp., z. B. Aphelenchoides arachidis, Aphelenchoides fragariae, Belonolaimus spp., z. B. Belonolaimus gracilis, Belonolaimus longicaudatus, Belonolaimus nortoni, Bursaphelenchus spp., z. B. Bursaphelenchus cocophilus, Bursaphelenchus eremus, Bursaphelenchus xylophilus, Cacopaurus spp., z. B. Cacopaurus pestis, Criconemella spp., z. B. Criconemella curvata, Criconemella onoensis, Criconemella ornata, Criconemella rusium, Criconemella xenoplax (= Mesocriconema xenoplax), Criconemoides spp., z. B. Criconemoides ferniae, Criconemoides onoense, Criconemoides ornatum, Ditylenchus spp., z. B. Ditylenchus dipsaci, Dolichodorus spp., Globodera spp., z. B. Globodera pallida, Globodera rostochiensis, Helicotylenchus spp., z. B. Helicotylenchus dihystera, Hemicriconemoides spp., Hemicycliophora spp., Heterodera spp., z. B. Heterodera avenae, Heterodera glycines, Heterodera schachtii, Hirschmaniella spp., Hoplolaimus spp., Longidorus spp., z. B. Longidorus africanus, Meloidogyne spp., z. B. Meloidogyne chitwoodi, Meloidogyne fallax, Meloidogyne hapla, Meloidogyne incognita, Meloinema spp., Nacobbus spp., Neotylenchus spp., Paralongidorus spp., Paraphelenchus spp., Paratrichodorus spp., z. B. Paratrichodorus minor, Paratylenchus spp., Pratylenchus spp., z. B. Pratylenchus penetrans, Pseudohalenchus spp., Psilenchus spp., Punctodera spp., Quinisulcius spp., Radopholus spp., z. B. Radopholus citrophilus, Radopholus similis, Rotylenchulus spp., Rotylenchus spp., Scutellonema spp., Subanguina spp., Trichodorus spp., z. B. Trichodorus obtusus, Trichodorus primitivus, Tylenchorhynchus spp., z. B. Tylenchorhynchus annulatus, Tylenchulus spp., z. B. Tylenchulus semipenetrans, Xiphinema spp., z. B. Xiphinema index.

### Nematoden

Ein Nematizid im Pflanzenschutz, wie hier beschrieben, besitzt die Fähigkeit, Nematoden zu bekämpfen.

Der Begriff "Nematoden bekämpfen" bedeutet das Abtöten der Nematoden oder das Verhindern oder Erschweren ihrer Entwicklung bzw. ihres Wachstums oder das Verhindern oder Erschweren ihres Eindringens in oder ihres Saugens am pflanzlichen Gewebe.

Dabei wird die Wirksamkeit der Verbindungen durch einen Vergleich von Mortalitäten, Gallenbildung, Zystenbildung, Nematodendichte pro Bodenvolumen, Nematodendichte pro Wurzel, Anzahl von Nematodeneiern pro Bodenvolumen, Beweglichkeit der Nematoden zwischen einer mit der Verbindung der Formel (I) behandelten Pflanze, Pflanzenteil oder dem behandelten Boden und einer unbehandelten Pflanze, Pflanzenteil oder unbehandeltem Boden (100 %) ermittelt. Vorzugsweise wird eine Verringerung um 25-50 % im Vergleich mit einer unbehandelten Pflanze, Pflanzenteil oder unbehandeltem Boden, besonders bevorzugt eine Verringerung um 51 - 79 % und ganz besonders bevorzugt das vollständige Abtöten oder die vollständige Verhinderung von Entwicklung und Wachstum der Nematoden durch eine Verringerung um 80 bis 100 % erreicht. Die Bekämpfung von Nematoden, wie hier beschrieben, beinhaltet ebenso die Bekämpfung der Nematoden-Vermehrung (Entwicklung von Zysten und/oder Eiern). Verbindungen der Formel (I) können ebenso verwendet werden, um die Pflanzen oder Tiere gesund zu erhalten und können kurativ, präventiv oder systemisch zur Nematoden-Bekämpfung eingesetzt werden.

Dem Fachmann sind Methoden bekannt, wie Mortalitäten, Gallenbildung, Zystenbildung, Nematodendichte pro Bodenvolumen, Nematodendichte pro Wurzel, Anzahl von Nematodeneiern pro Bodenvolumen, Beweglichkeit der Nematoden bestimmt werden.

Die Verwendung einer Verbindung der Formel (I) kann die Pflanze gesund erhalten und beinhaltet ebenso eine Reduktion der von Nematoden hervorgerufenen Schäden sowie eine Erhöhung der Erntemenge.

Der Begriff "Nematoden" bezieht sich im vorliegenden Zusammenhang auf Pflanzennematoden, unter die man alle Nematoden zusammenfasst, die Pflanzen schädigen. Pflanzennematoden umfassen pflanzenparasitäre Nematoden und im Boden lebende Nematoden. Zu den pflanzenparasitären Nematoden zählen Ektoparasiten wie Xiphinema spp., Longidorus spp. und Trichodorus spp.; Halbparasiten wie Tylenchulus spp.; migratorische Endoparasiten wie Pratylenchus spp., Radopholus spp. und Scutellonema spp.; ortsgebundene Parasiten wie Heterodera spp., Globodera spp. und Meloidogyne spp., sowie Stängel- und Blattendoparasiten wie Ditylenchus spp., Aphelenchoides spp. und Hirschmaniella spp.. Besonders schädliche wurzelparasitäre Bodennematoden sind zum Beispiel zystenbildende Nematoden der Gattungen Heterodera oder Globodera, und/oder Wurzelgallennematoden der Gattung Meloidogyne. Schädliche Arten dieser Gattungen sind zum Beispiel Meloidogyne incognita, Heterodera glycines (Sojabohnenzystennematode), Globodera pallida und Globodera rostochiensis (Gelbe Kartoffelzystennematode), wobei diese Arten wirksam mit dem im vorliegenden Text beschriebenen Verbindungen bekämpft werden. Die Verwendung der im vorliegenden Text beschriebenen Verbindungen ist jedoch keineswegs auf diese Gattungen oder Arten beschränkt, sondern erstreckt sich in gleicher Weise auch auf andere Nematoden.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

Der Wirkstoff der Formel (I) kann in die üblichen Formulierungen und in die daraus bereiteten Anwendungsformen als Schädlingsbekämpfungsmittel wie z. B. Drench-, Drip- und Spritzbrühen überführt werden. Erfindungsgemäss erfolgt die Applikation des Wirkstoffes durch Tröpfchenapplikation auf den Boden.

Gegebenenfalls enthalten die Anwendungsformen weitere Schädlingsbekämpfungsmittel und/oder die Wirkung verbessernde Adjuvantien wie Penetrationsförderer, z. B. pflanzliche Öle wie beispielsweise Rapsöl, Sonnenblumenöl, Mineralöle wie beispielsweise Paraffinöle, Alkylester pflanzlicher Fettsäuren wie beispielsweise Rapsöl- oder Sojaölmethylester oder Alkanol-alkoxylate und/oder Spreitmittel wie beispielsweise Alkylsiloxane und/oder Salze, z. B. organische oder anorganische Ammonium- oder Phosphoniumsalze wie beispielsweise Ammoniumsulfat oder Diammonium-hydrogenphosphat und/oder die Retention fördernde Mittel wie z. B. Dioctylsulfosuccinat oder Hydroxypropyl-guar-Polymere und/oder Humectants wie z. B. Glycerin und/oder Dünger wie beispielsweise Ammonium, Kalium oder Phosphor enthaltende Dünger.

Übliche Formulierungen sind beispielsweise wasserlösliche Flüssigkeiten (SL), Emulsionskonzentrate (EC), Emulsionen in Wasser (EW), Suspensionskonzentrate (SC, SE, FS, OD), in Wasser dispergierbare Granulate (WG), Granulate (GR) und Kapselkonzentrate (CS); diese und weitere mögliche Formuliertypen sind beispielsweise durch Crop Life International und in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576 beschrieben. Gegebenenfalls enthalten die Formulierungen neben einer oder mehreren Verbindungen der Formel (I) weitere agrochemische Wirkstoffe.

Vorzugsweise handelt es sich um Formulierungen oder Anwendungsformen, welche Hilfsstoffe wie beispielsweise Streckmittel, Lösemittel, Spontanitätsförderer, Trägerstoffe, Emulgiermittel, Dispergiermittel, Frostschutzmittel, Biozide, Verdicker und/oder weitere Hilfsstoffe wie beispielsweise Adjuvantien enthalten. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Mittel, die die Retention, das Spreitverhalten, das Anhaften an der Blattoberfläche oder die Penetration fördern.

Diese Formulierungen werden in bekannter Weise hergestellt, z. B. durch Vermischen der Verbindungen der Formel (I) mit Hilfsstoffen wie beispielsweise Streckmitteln, Lösemitteln und/oder festen Trägerstoffen und/oder weiteren Hilfsstoffen wie beispielsweise oberflächenaktiven Stoffen. Die Herstellung der Formulierungen erfolgt entweder in geeigneten Anlagen oder auch vor oder während der Anwendung.

Als Hilfsstoffe können solche Stoffe Verwendung finden, die geeignet sind, der Formulierung der Verbindungen der Formel (I) oder den aus diesen Formulierungen bereiteten Anwendungsformen (wie z. B. gebrauchsfähigen Schädlingsbekämpfungsmitteln wie Spritzbrühen oder Saatgutbeizen) besondere Eigenschaften, wie bestimmte physikalische, technische und/oder biologische Eigenschaften zu verleihen.

Als Streckmittel eignen sich z. B. Wasser, polare und unpolare organische chemische Flüssigkeiten z. B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), der Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsulfoxid), der Carbonate und der Nitrile

Im Falle der Benutzung von Wasser als Streckmittel können z. B. auch organische Lösemittel als Hilfslösemittel verwendet werden. Als flüssige Lösemittel kommen im Wesentlichen infrage: Aromaten wie Xylol, Toluol oder Alkylnaphthaline, chlorierte Aromaten oder chlorierte aliphatische Kohlenwasserstoffe wie Chlorbenzole, Chlorethylene oder Methylenchlorid, aliphatische Kohlenwasserstoffe wie Cyclohexan oder Paraffine, z. B. Erdölfraktionen, mineralische und pflanzliche Öle, Alkohole wie Butanol oder Glykol sowie deren Ether und Ester, Ketone wie Aceton, Methylethylketon, Methylisobutylketon oder Cyclohexanon, stark polare Lösemittel wie Dimethylformamid oder Dimethylsulfoxid, Carbonate wie Propylencarbonat, Butylencarbonat, Diethylcarbonat oder Dibutylcarbonat, oder Nitrile wie Acetonitril oder Propannitril.

Grundsätzlich können alle geeigneten Lösemittel verwendet werden. Geeignete Lösemittel sind beispielsweise aromatische Kohlenwasserstoffe wie z. B. Xylol, Toluol oder Alkylnaphthaline, chlorierte aromatische oder chlorierte aliphatische Kohlenwasserstoffe wie z. B. Chlorbenzol, Chlorethylen, oder Methylenchlorid, aliphatische Kohlenwasserstoffe wie z. B. Cyclohexan, Paraffine, Erdölfraktionen, mineralische und pflanzliche Öle, Alkohole wie z. B. Methanol, Ethanol, iso-Propanol, Butanol oder Glykol sowie deren Ether und Ester, Ketone wie z. B. Aceton, Methylethylketon, Methylisobutylketon oder Cyclohexanon, stark polare Lösemittel wie Dimethylsulfoxid, Carbonate wie Propylencarbonat, Butylencarbonat, Diethylcarbonat, Dibutylcarbonat, Nitrile wie Acetonitril oder Propannitril, sowie Wasser.

Grundsätzlich können alle geeigneten Trägerstoffe eingesetzt werden. Als Trägerstoffe kommen insbesondere infrage: z. B. Ammoniumsalze und natürliche Gesteinsmehle wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und natürliche oder synthetische Silikate, Harze, Wachse und/oder feste Düngemittel. Mischungen solcher Trägerstoffe können ebenfalls verwendet werden. Als Trägerstoffe für Granulate kommen infrage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Papier, Kokosnussschalen, Maiskolben und Tabakstängel.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z. B. Aerosol-Treibgase wie Halogenkohlenwasserstoffe sowie Butan, Propan, Stickstoff und Kohlendioxid.

Beispiele für Emulgier- und/oder Schaum erzeugende Mittel, Dispergiermittel oder Benetzungsmittel mit ionischen oder nicht-ionischen Eigenschaften oder Mischungen dieser oberflächenaktiven Stoffe sind Salze von Polyacrylsäure, Salze von Lignosulfonsäure, Salze von Phenolsulfonsäure oder Naphthalinsulfonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulfobernsteinsäureestern, Taurinderivate (vorzugsweise Alkyltaurate), Isethionatderivate, Phosphorsäureester von polyethoxylierten Alkoholen oder Phenolen, Fettsäureester von Polyolen und Derivate der Verbindungen enthaltend Sulfate, Sulfonate und Phosphate, z. B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn eine der Verbindungen der Formel (I) und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z. B. Eisenoxid, Titanoxid, Ferrocyanblau und organische Farbstoffe wie Alizarin-, Azo- und Metallphthalocyaninfarbstoffe und Nähr- und Spurennährstoffe wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und/oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten wie Gummiarabikum, Polyvinylalkohol, Polyvinylacetat sowie natürliche Phospholipide wie Kephaline und Lecithine und synthetische Phospholipide. Weitere Hilfsstoffe können mineralische und pflanzliche Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner, Feuchthaltemittel, Spreitmittel. Im Allgemeinen können die Verbindungen der Formel (I) mit jedem festen oder flüssigen Zusatzstoff, welcher für Formulierungszwecke gewöhnlich verwendet wird, kombiniert werden.

Als Retentionsförderer kommen alle diejenigen Substanzen in Betracht, die die dynamische Oberflächenspannung verringern wie beispielsweise Dioctylsulfosuccinat oder die die Visko-Elastizität erhöhen wie beispielsweise Hydroxypropyl-guar-Polymere.

Als Penetrationsförderer kommen im vorliegenden Zusammenhang alle diejenigen Substanzen in Be-tracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der (in der Regel wässerigen) Applikationsbrühe und/oder aus dem Spritzbelag in die Kutikula der Pflanze eindringen und dadurch die Beweglichkeit der Wirkstoffe in der Kutikula erhöhen können. Die in der Literatur (Baur et al., 1997, Pesticide Science 51, 131-152) beschriebene Methode kann zur Bestimmung dieser Eigenschaft eingesetzt werden. Beispielhaft werden genannt Alkoholalkoxylate wie beispielsweise Kokosfettethoxylat (10) oder Isotridecylethoxylat (12), Fettsäureester wie beispielsweise Rapsöl- oder Sojaölmethylester, Fettaminalkoxylate wie beispielsweise Tallowamine-ethoxylat (15) oder Ammonium- und/oder Phosphonium-Salze wie beispielsweise Ammoniumsulfat oder Diammonium-hydrogenphosphat.

Die Formulierungen enthalten bevorzugt zwischen 0,00000001 und 98 Gew.-% der Verbindung der Formel (I), besonders bevorzugt zwischen 0,01 und 95 Gew.-% der Verbindung der Formel (I), ganz besonders bevorzugt zwischen 0,5 und 90 Gew.-% der Verbindung der Formel (I), bezogen auf das Gewicht der Formulierung.

Der Gehalt an der Verbindung der Formel (I) in den aus den Formulierungen bereiteten Anwendungsformen (insbesondere Schädlingsbekämpfungsmittel) kann in weiten Bereichen variieren. Die Konzentration der Verbindung der Formel (I) in den Anwendungsformen kann üblicherweise zwischen 0,00000001 und 95 Gew.-% der Verbindung der Formel (I), vorzugsweise zwischen 0,00001 und 1 Gew.-%, bezogen auf das Gewicht der Anwendungsform, liegen. Die Anwendung geschieht in einer den Anwendungsformen angepaßten üblichen Weise. Die erfindungsgemäss zum Einsatz kommende Anwendung ist die Tröpfchenapplikation auf den Boden.

Beispielhaft jedoch nicht erfindungsgemäss verwendet werden die Verbindungen der Formel (I) nach Angießen (Drench) gegen tierische Schädlinge aus den folgenden Schädlingsfamilien eingesetzt:
Bevorzugt sind aus der Familie der Blasenläuse (Pemphigidae): Eriosoma spp., Pemphigus spp., in Kulturen wie z.B. Zitrus, Kernobst, Steinobst, Blattgemüse, Wurzel- und Knollengemüse und Zierpflanzen. Bevorzugt sind aus der Familie der Wurzelläuse (Phylloxeridae): Phylloxera spp. in Wein, Nüssen, Zitrus. Bevorzugt sind aus der Familie der Blattflöhe (Psyllidae): Psylla spp., Paratrioza spp., Tenalaphara spp., Diaphorina spp., Trioza spp., in Kulturen wie z.B. Kernobst, Steinobst, Zitrus, Gemüse, Kartoffeln, in tropischen Kulturen.

Bevorzugt sind aus der Familie der Napfschildläuse (Coccidae): Ceroplastes spp., Drosicha spp. Pulvinaria spp., Protopulminaria spp., Saissetia spp., Coccus spp., in mehrjährigen Kulturen wie z.B. Zitrus, Kernobst, Steinobst, Oliven, Wein, Kaffee, Tee, tropischen Kulturen, Zierpflanzen, Gemüse.

Bevorzugt sind aus der Familie der Deckelschildläuse (Diaspididae): Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in Kulturen wie z.B. Zitrus, Kernobst, Steinobst, Mandeln, Pistazien, Nüssen, Oliven, Tee, Zierpflanzen, Wein, tropischen Kulturen.

Bevorzugt sind aus der Familie der Röhrenschildläuse (Ortheziidae): Orthezia spp. in Zitrus, Kernobst, Steinobst.

Bevorzugt sind aus der Familie der Schmier- und Wollläuse (Pseudococcidae): Pericerga, Pseudococcus spp., Planococcus spp., Dysmicoccus spp., in Kulturen wie z.B. Zitrus, Stein- und Kernobst, Tee, Wein, Gemüse, Zierpflanzen und tropischen Kulturen.

Weiterhin bevorzugt sind aus der Familie der Mottenschildläuse (Aleyrodidae): Bemisia tabaci, Bemisia argentifolii, Trialeurodes vaporariorum, Aleurothrixus floccosus, Aleurodes spp., Dialeurodes spp., Parabemisia myricae in Kulturen wie z.B. Gemüse, Melonen, Kartoffeln, Tabak, Beerenfrüchten, Zitrus, Zierpflanzen, Baumwolle, Soja und tropischen Kulturen.

Außerdem bevorzugt sind aus der Familie der Röhrenläuse (Aphidae):
Myzus spp. in Tabak, Steinobst, Beerenfrüchten, Fruchtgemüse, Blattgemüse, Knollen- und Wurzelgemüse, Melonen, Kartoffeln, Zierpflanzen, Gewürze,
Acyrthosiphon onobrychis in Gemüse,
Aphis spp. in Tabak, Zitrus, Kernobst, Steinobst, Melonen, Erdbeeren, Beerenfrüchten, Fruchtgemüse, Blattgemüse, Knollen-, Stangen- und Wurzelgemüse, Zierpflanzen, Kartoffeln, Kürbisse, Gewürze,
Rhodobium porosum in Erdbeeren,
Nasonovia ribisnigri in Blattgemüse,
Macrosiphum spp. in Zierpflanzen, Kartoffeln, Blatt-, und Fruchtgemüse, Erdbeeren,
Phorodon humuli in Hopfen,
Brevicoryne brassicae in Blattgemüse,
Toxoptera spp.in Zitrus, Steinobst, Mandeln, Nüssen, Gewürzen,
Aulacorthum spp. in Zitrus, Kartoffeln, Frucht- und Blattgemüse,
Anuraphis cardui in Gemüse,
Brachycaudus helycrisii in Sonnenblumen,
Acyrthosiphon onobrychis in Gemüse.

Bevorzugt sind ebenfalls aus der Familie der Thripse (Thripidae): Anaphothrips spp., Baliothrips spp., Caliothrips spp., Frankliniella spp., Heliothrips spp., Hercinothrips spp., Rhipiphorothrips spp., Scirtothrips spp., Kakothrips spp., Selenothrips spp. und Thrips spp., in Kulturen wie z.B. Obst, Baumwolle, Wein, Tee, Nüsse, tropischen Kulturen, Zierpflanzen, Coniferen, Tabak, Gewürze, Gemüse, Beerenfrüchte, Melonen, Zitrus und Kartoffeln.

Bevorzugt sind außerdem aus den Familien der Minierfliegen (Agromyzidae) und Blumenfliegen (Anthomyiidae): Agromyza spp., Amauromyza spp., Atherigona spp., Chlorops spp., Liriomyza spp., Oscinella spp., Pegomyia spp. in Kulturen wie z.B. Gemüse, Melonen, Kartoffeln, Nüsse, Zierpflanzen.

Bevorzugt sind aus den Familien der Zwergzikaden (Cicadellidae) und Hornzikaden (Delphacidae); Circulifer spp., Dalbus spp., Empoasca spp., Erythroneura spp., Homalodisca spp., Iodioscopus spp., Laodelphax spp., Nephotettix spp., Nilaparvata spp., Oncometopia spp., Sogatella spp., in Kulturen wie z.B. Zitrus, Obst, Wein, Kartoffeln, Gemüse, Zierpflanzen, Coniferen, Melonen, Beerenfrüchte, Tee, Nüssen, Reis und tropischen Kulturen.

Bevorzugt sind aus der Familie der Miniermotten (Gracillariidae):
Caloptilia spp., Gracillaria spp., Lithocolletis spp., Leucoptera spp., Phtorimaea spp., Phyllocnistis spp. in Kulturen wie Kernobst, Steinobst, Wein, Nüsse, Zitrus, Koniferen, Kartoffeln, Kaffee.

Bevorzugt sind aus der Familie der Gallmücken (Cecodomyiidae):
Contarinia spp., Dasineura spp., Diplosis spp., Prodiplosis spp., Thecodiplosis spp., Sitodiplosis spp., Haplodiplosis spp. in Kulturen wie Zitrus, Kernobst, Steinobst, Gemüse, Kartoffeln, Gewürze, Beerenobst, Koniferen, Hopfen.

Ebenso bevorzugt sind aus der Familie der Fruchtfliegen (Tephritidae):
Anastrepha spp., Ceratitis spp., Dacus spp., Rhagoletis spp. in Kulturen wie Gemüse, Beerenfrüchte, Melonen, Kern- und Steinobst, Zierpflanzen, Kartoffeln, Wein, tropischen Kulturen, Zitrus, Oliven.

Außerdem bevorzugt sind Milben aus den Familien der Spinnmilben (Tetranychidae) und der Gallmilben (Eriophydae):
Tetranychus spp., Panonychus spp., Aculops spp. in Kulturen wie Gemüse, Kartoffeln, Zierpflanzen, Zitrus, Wein, Koniferen.

Die Erfindung wird durch die folgenden Beispiele erläutert. Diese sind in keiner Weise beschränkend aufzufassen.

### Anwendungsbeispiele Drench (nicht erfindungsgemäss)

### Blasenläuse (Pemphigidae)

Ganz besonders bevorzugt ist die Bekämpfung folgender Arten aus der Familie der Blasenläuse (Pemphigidae):
Eriosoma lanigerum in Kernobst, wie z.B. Äpfeln, Birnen und Steinobst wie z.B. Kirschen, Pflaumen, Zwetschgen,
Eriosoma pyricola in Kernobst wie z.B. Äpfeln und Birnen
Pemphigus bursarius in Zierpflanzen, wie z.B. Chrysanthemen, in Gemüse wie z.B. Kopfsalat
Pemphigus fuscicornis in Rüben, Blattgemüse, wie z.B. Kopfsalat, Wurzelgemüse wie z.B. Möhren, Zierpflanzen wie z.B. Chrysanthemen

### Wurzeläuse (Phylloxeridae)

Ganz besonders bevorzugt ist die Bekämpfung folgender Arten aus der Familie der Wurzelläuse (Phylloxeridae):
Phylloxera devastatrix in Wein, in Nüssen wie z.B. Pekannüssen,
Phylloxera vastatrix, (≙ Viteus vitifolii) in Wein.

### Blattflöhe (Psyllidae)

Ganz besonders bevorzugt ist die Bekämpfung folgender Arten aus der Familie der Blattflöhe (Psyllidae):
Psylla pyricola in Kernobst wie z.B. Birnen, Äpfeln, in Steinobst wie z.B. Kirschen, Pflaumen, Zwetschgen, Pfirsichen, Nektarinen,
Psylla piri in Kernobst wie z.B. Birnen,
Psylla pyrisuga in Kernobst wie z.B. Birnen,
Psylla costalis in Kernobst wie z.B. Äpfeln,
Paratrioza cockerelli in Fruchtgemüse wie z.B. Tomaten, Paprika, Chillis, in Wurzelgemüse wie z.B. Möhren, in Kartoffeln,
Tenalaphara malayensisin tropischen Kulturen wie z.B. Durians (Stinkfrüchte),
Diaphorina citri in Zitrus wie z.B. Orangen, Mandarinen, Limonen, Grapefruits,
Trioza erythrae in Zitrus wie z.B. Orangen, Grapefruits.

### Napfschildläuse (Coccidae)

Ganz besonders bevorzugt ist die Bekämpfung folgender Arten aus der Familie der Napfschildläuse (Coccidae) in folgenden Kulturen:

| | |
|---|---|
| Ceroplastes ceriferus | in Zitrus wie z.B. Orangen, Grapefruits, Mandarinen, Zitronen, Limetten, Satsumas |
| Ceroplastes floridensis | |
| Ceroplastes rubens | |
| Ceroplastes rusci | |
| Drosicha mangiferae | in tropischen Kulturen, z.B. Mangos |
| Drosicha stebbengii | |
| Pulvinaria aurantii | in Zitrus wie z.B. Orangen, Grapefruits, Mandarinen, Zitronen, Limetten, Satsumas, in Wein |
| Pulvinaria aethiopicus | |
| Pulvinaria vitis | |
| Protopulminaria pyriformis | in Kern- und Steinobst, |
| Saissetia oleae | in Zitrus wie z.B. Orangen, Grapefruits, Mandarinen, Limetten, in Zitrus wie z.B. Zitronen, Satsumas, in Oliven, in tropischen Kulturen z.B. Bananen |
| Saissetia nigra | |
| Coccus viridis, Coccus pseudomagnoliarum | in Zitrus wie z.B. Orangen, Mandarinen, Grapefruits, Limetten, Zitronen, Satsumas, in tropischen Kulturen, z.B. Ananas |
| Coccus hesperdium | in Kernobst wie z.B. Äpfeln, Birnen, in Steinobst wie z.B. Pfirsichen, Nektarinen, Pflaumen, Aprikosen, Kirschen, in Kaffee, in Oliven, in Tee, in Gemüse wie z.B. Bohnen, in Wein |

### Deckelschildläuse (Diaspididae)

Ganz besonders bevorzugt ist die Bekämpfung folgender Arten aus der Familie der Deckelschildläuse (Diaspididae) in folgenden Kulturen:

| | |
|---|---|
| Quadraspidiotus perniciosus | in Zitrus wie z.B. Orangen, Mandarinen, Limonen, Grapefruits, in Kernobst wie z.B. Äpfeln, Birnen, Quitten, in Steinobst wie z.B. Pfirsichen, Nektarinen, Aprikosen, Pflaumen, Kirschen, in Nüssen wie z.B. Mandeln, Pistazien, Wallnüsse, Haselnüsse, in Zierpflanzen wie z.B. Sträuchern, Koniferen, Topfpflanzen, in tropischen Kulturen, z.B. Litschies |
| Quadraspidiotus juglansregiae | |
| Aonidiella aurantii | in Zitrus wie z.B. Orangen, Mandarinen, Grapefruits, Limetten, Zitronen, Satsumas |
| Aonidiella citrina | |
| Lepidosaphes ulmi | in Zitrus wie z.B. Orangen, Mandarinen, Grapefruits, Limetten, Zitronen, Satsumas, in Kernobst wie z.B. Äpfeln und Birnen, in Steinobst wie z.B. Pfirsiche, Nektarinen, Pflaumen, Aprikosen, Kirschen, |
| Lepidosaphes beckii | |
| Aspidiotus destructor | in Zitrus wie z.B. Orangen, Mandarinen, Grapefruits, Limetten, Zitronen, Satsumas, in Zierpflanzen wie z.B. Sträuchern, Topfpflanzen, in Oliven, in tropischen Kulturen, z.B. Mangos, Limonen, |
| Aspidiotus hederae | |
| Aspidiotus nerii | |
| Aspidiotus ficus | |
| Pseudaulacaspis pentagona | in Kernobst wie z.B. Äpfel, Birnen, in Steinobst wie z.B. Pfirsiche, Aprikosen, Nektarinen, Kirschen, Pflaumen, Zwetschgen, in Tee, |
| Unaspis yanonensis | in Zitrus wie z.B.Orangen, Mandarinen, Limetten, Grapefruits, Zitronen, Satsumas, in tropischen Kulturen, z.B. Ananas, Mangos, |
| Unaspis citri | |
| Pinnaspis aspidistrae | |
| Parlatoria ziziphus | in Zitrus wie z.B. Orangen, Mandarinen, Limetten, Zitronen, Satsumas, Grapefruits, in Oliven, |
| Parlatoria pergandei | |
| Parlatoria oleae | |
| Selenaspidus articulatus | in Zitrus wie z.B. Orangen, Mandarinen, Limetten, Grapefruits, Zitronen, Satsumas |

### Röhrenschildläuse (Ortheziidae)

Ganz besonders bevorzugt ist die Bekämpfung folgender Arten aus der Familie der Röhrenschildläuse (Ortheziidae) in folgenden Kulturen:

| | |
|---|---|
| Orthezia praelonga | in Zitrus wie z.B. Orangen, Mandarinen, Limetten, Grapefruits, Zitronen, Satsumas, Apfelsinen |

### Schmier- und Wollläuse (Pseudococcidae)

Ganz besonders bevorzugt ist die Bekämpfung folgender Arten aus der Familie der Schmier- und Wollläuse (Pseudococcidae) in folgenden Kulturen:

| | |
|---|---|
| Pseudococcus citri | in Zitrus wie z.B. Orangen, Mandarinen, Grapefruits, Limetten, Zitronen, Satsumas, in Kernobst wie z.B. Äpfeln und Birnen, in Wein, in Zierpflanzen, in tropischen Kulturen wie z.B. Ananas, |
| Pseudococcus comstocki | |
| Pseudococcus maritimus | |
| Dysmicoccus boninsis | in Kernobst wie z.B. Äpfeln, Birnen, in Tee, in tropischen Kulturen wie z.B. Ananas, Guyabano, |
| Dysmicoccus cryptus | |
| Dysmicoccus brevipes | |
| | |
| Planococcus lilacinus | in Zitrus wie z.B. Orangen, Mandarinen, Grapefruits, Limetten, Zitronen, Satsumas, in Wein, |
| Planococcus citri | |
| Planococcus ficus | |
| Pericerga purchasi | in Zitrus wie z.B. Orangen, Mandarinen, Grapefruits, Limetten, Zitronen, Satsumas |
| Phenacoccus manihote | in Baumwolle, Kernobst, z. B Apfel, Wein, Maniok, Zierpflanzen |
| Phenacoccus selenopsis | |
| Phenacoccus madeirensis | |
| Phenacoccus aceris | |

### Beispiel 1A (nicht erfindungsgemäss)

Tafeltrauben mit ca. 2.1 m Kronenhöhe der Sorte Crimson Seedless (Pflanzenwachstumsstadium BBCH 69) werden in drei Replikationen gegen Planococcus ficus (PLANFI) mit 444 ml/ha einer Wirkstofflösung enthaltend den Wirkstoff Beispiel (I-2) (225 SC) und zum Vergleich mit 455 ml/ha der Standards Imidacloprid (550SC) und 2045ml Sivanto (Flupyradifuron) (400SL) mit einer Wasseraufwandmenge von 1122 l/ha gedrencht.

Die Auswertung erfolgt 41 und 83 Tage nach der Behandlung durch Auszählung durch Schmierläuse geschädigter und nicht geschädigter Trauben. Die Wirksamkeit wird mit Hilfe der Abbott-Formel ermittelt.

| Aufwandmenge | Wirksamkeit (%) Abbott | | | | |
|---|---|---|---|---|---|
| | gegen PLANFI | | | | |
| | 41d | 83 d | | | |
| Imidacloprid (250g/ha Wirkstoff) | 100 | 16.7 | | | |
| Flupyradifuron (818g/ha Wirkstoff ) | 100 | 100 | | | |
| Beispiel (I-2) (100g/ha Wirkstoff) | 100 | 100 | | | |

### Mottenschildläuse (Aleyrodidae)

Weiterhin ganz besonders bevorzugt ist die Bekämpfung folgender Arten aus der Familie der Mottenschildläuse (Aleyrodidae) in folgenden Kulturen:

| | |
|---|---|
| Bemisia tabaci | in Gemüse wie Paprika, Tomaten, Gurken, Kohl z.B. Broccoli, Bohnen, Salat, Auberginen, Zucchini, Kürbisse, in Beerenfrüchten, in Melonen z.B. Wassermelonen, Netzmelonen, Cantaloup-Melonen, in Zierpflanzen wie Rosen, Hibiskus, in Zitrus wie Orangen, Mandarinen, Grapefruits sowie in Kartoffeln, in Baumwolle, in Tabak und in tropischen Kulturen wie z.B. Papayas, Bananen, |
| Bemisia argentifolii | in Baumwolle, in Gemüse wie Paprika, Tomaten, Gurken, Bohnen, Sojabohnen, Kürbisgewächse, Auberginen, Zucchini, Kohl, in Beerenfrüchten, in Melonen z.B. Wassermelonen, Netzmelonen, Cantaloup-Melonen, in Zierpflanzen wie z.B. Rosen, Hibiskus, in tropischen Kulturen wie z.B. Papayas, Bananen, |
| Trialeurodes vaporariorum | in Gemüse wie Tomate, Paprika, Bohnen, Gurken, Kürbisse, Auberginen, in Beerenfrüchten, in Melonen sowie in Zierpflanzen wie z.B. Rosen, Hibiskus, |
| Aleurothrixus floccosus | in Zitrus wie Orangen, Mandarinen, Zitronen, Apfelsinen, |
| Aleurodes citri | in Zitrus wie Orangen, Mandarinen, Zitronen, Grapefruits, Limetten, Kumquats, |
| Aleurodes fragriae | in Beerenfrüchten, wie z.B. Erdbeeren |
| Aleurodes azaleae | in Zierpflanzen, wie z.B. Azaleen |

### Beispiel 1 (nicht erfindungsgemäss)

### Bemisia tabaci -Test (BEMITA Bodenapplikation)

Lösungsmittel: 4 Gewichtsteile Aceton
Emulgator: 1 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.
3 Tage nach dem Eintopfen einer Baumwollpflanze (*Gossypium hirsutum*) werden die Applikationslösungen auf die Erdoberfläche der Töpfe (1 Pflanze pro Topf) gegossen.

Die angegebene Konzentration bezieht sich auf die Wirkstoffmenge pro Volumeneinheit Boden (mg/l = ppm). Nach einer Woche wird mit der Weißen Fliege (*Bemisia tabaci*) zur Eiablage infiziert. Nach 2 Tagen werden die adulten Tiere abgeblasen.

Nach der gewünschten Zeit wird die Abtötung der Eier bzw. Larven in % bestimmt. Dabei bedeutet 100 %, dass alle Tiere abgetötet wurden; 0 % bedeutet, dass keine Tiere abgetötet wurden.

Bei diesem Test zeigen z. B. die folgenden Verbindungen der Herstellungsbeispiele überlegende Wirksamkeit gegenüber dem Stand der Technik: siehe Tabelle

| Substanz | Konzentration | Tierart | % Wirkung |
|---|---|---|---|
| Spirotetramat bekannt aus WO 07/126691 dort als Bsp. (I-4) aufgeführt | 2 mg/Pflanze | BEMITA | 25 |
| Beispiel (I-2) erfindungsgemäß | 2 mg/Pflanze | BEMITA | 100 |

### Röhrenläuse (Aphididae)

Ganz besonders bevorzugt ist die Bekämpfung folgender Arten aus der Familie der Röhrenläuse in folgenden Kulturen:

| | |
|---|---|
| Myzus persicae | in Frucht- und Blattgemüse wie z.B. Paprika, Bohne, Aubergine, Tomaten, Melonen, Kopfsalat; Kartoffeln, Erdbeeren, in Zierpflanzen wie z.B. Rosen, Koniferen, Gewürze wie z. B. Chili; Tabak, Kernobst, Steinobst |
| Aphis gossypii | in Zitrus wie z.B. Orangen, Mandarinen, Grapefruits, in Fruchtgemüse wie z. B. Gurke, Kürbissen, Aubergine, Tomate, Paprika, Melonen; Erdbeeren, Gewürzen, Kartoffeln, Rüben, in Zierpflanzen wie z.B. Rosen; Koniferen |
| Aphis craccivora | in Zierpflanzen wie z. B. Stiefmütterchen; Fruchtgemüse wie z. B. Erbsen |
| Aphis fabae | in Fruchtgemüse wie z. B. Bohnen, Erbsen; in Knollen-, Wurzel- und Stangengemüse wie z. B. Sellerie |
| Rhodobium porosum | in Erdbeeren |
| Nasonovia ribisnigri | in Blattgemüse wie beispielsweise Kopfsalat |
| Macrosiphum rosae | in Zierpflanzen wie z.B. Rosen |
| Macrosiphum euphorbiae | in Blatt- und Fruchtgemüse wie z.B. Auberginen, Salat, Paprika, Tomaten; Kartoffeln, Erdbeeren |
| Phorodon humuli | in Hopfen |
| Aulacorthum solani | in Zitrus wie z.B. Orangen, Mandarinen, Grapefruits, Limetten; in Frucht- und Blattgemüse wie z.B. Kopfsalat, Tomaten, Paprika, Auberginen; Kartoffeln |
| Toxoptera citricola | in Zitrus, wie z.B. Orangen, Mandarinen, Limetten, Grapefruits |
| Toxoptera citricida | in Zitrus, wie z.B. Orangen, Mandarinen, Limetten, Grapefruits, |
| Toxoptera aurantii | in Zitrus wie z.B. Orangen, Mandarinen, Grapefruits, Limetten; in Gewürzen wie z.B. Pfeffer; in Nüssen wie z.B. Cashewnüssen |
| Toxoptera odinae | in Zitrus wie z.B. Orangen, Mandarinen, Grapefruits, Limetten; in Gewürzen wie z.B. Pfeffer; in Nüssen wie z.B. Cashewnüssen |
| Anuraphis cardui | in Gemüse wie z.B. Artischocken |
| Brachycaudus helycrisii | in Sonnenblumen |
| Acyrthosiphon onobrychis | in Gemüse wie z.B. Erbsen |

### Beispiel 2 (nicht erfindungsgemäss)

Ca. 4 m² Parzellen mit Melonenpflanzen der Sorte "Piel de Sapo" (12 Tage nach Aussaat), werden in drei Replikationen gegen Aphis gossypii (APHIGO) mit 50 ml einer Wirkstofflösung pro Pflanze enthaltend den Wirkstoff Beispiel (I-2) (025 SC) und zum Vergleich gegen den Standard Spirotetramat (240 SC) in der angegebenen Aufwandmenge angegossen. Die Auswertung erfolgt 2, 5, 8, 15 und 21 Tage nach der Behandlung, indem man die Wirksamkeit mit Hilfe der Abbott-Formel ermittelt.

| Aufwandmenge (mg Wirkstoff / Pflanze) | Wirksamkeit (%) Abbott gegen APHIGO | | | | |
|---|---|---|---|---|---|
| | 2 d | 5 d | 8 d | 15 d | 21 d |
| Spirotetramat ; 24 | 58.1 | 83.2 | 91.4 | 93.8 | 55.8 |
| Beispiel (I-2) ; 1 | 43.9 | 85.9 | 93.0 | 95.3 | 63.9 |

### Thripse (Thripidae)

Weiterhin ganz besonders bevorzugt ist die Bekämpfung folgender Arten aus der Familie der Thripse (Thripidae) in folgenden Kulturen:

| | |
|---|---|
| Frankliniella occidentalis | in Gemüse wie z.B. Paprika, Tomaten, Gurken, Kohl z.B. Broccoli, Bohnen, Salat, Auberginen, Zucchini, Kürbisse, in Beerenfrüchten, z.B. Erdbeeren, in Melonen z.B. Wassermelonen, Netzmelonen, Cantaloup-Melonen, in Zierpflanzen wie Rosen, Hibiskus, Chrysanthemen sowie in Kartoffeln und in tropischen Kulturen wie z.B. Papayas, Avocado, Baumwolle, Tabak, Coniferen |
| Frankliniella schultzei | |
| Frankliniella fusca | |
| Thrips palmi | in Baumwolle, in Gemüse wie z.B. Paprika, Tomaten, Gurken, Bohnen, Kürbisgewächse, Auberginen, Zucchini, Kohl, Lauch, Zwiebeln, Frühlingszwiebeln, in Beerenfrüchten, in Melonen z.B. Wassermelonen, Netzmelonen, Cantaloup-Melonen, in Zierpflanzen wie z.B. Rosen, Hibiskus, in tropischen Kulturen wie z.B. Papayas, Ananas, Bananen, Kartoffeln, Wein, Baumwolle, Reis, Nüsse |
| Thrips tabaci | |
| Thrips hawaiiensis | |
| Heliothrips haemorrhoidalis | in Gemüse wie z.B. Tomaten, Paprika, Bohnen, Gurken, Kürbisse, Auberginen, in Melonen sowie in Zierpflanzen wie z.B. Rosen, Hibiskus, Azaleen, tropische Kulturen wie Guaven, Zitrus wie z.B. Zitronen, Orangen, Wein, Nüsse wie z.B. Macademia-Nüsse |
| Hercinothrips femoralis | in tropischen Kulturen wie z.B. Bananen, Zierpflanzen, Gemüse wie z.B. Bohnen |
| Hercinothrips bicinctus | |
| Hercinothrips phaseoli | |
| Caliothrips phaseoli | in Gemüse, wie z.B. Bohnen, Zucchini, in tropischen Früchten wie z.B. Avocados |
| Baliothrips biformis | in Reis |
| Anaphothrips obscurus | in Mais, Kohlgemüse wie z.B. Weißkohl, Getreide wie z.B. Weizen |
| Scirthothrips aurantii | in Zitrus wie z.B. Orangen, Zitronen, Grapefruits, Mandarinen, Zierpflanzen, Gemüse wie z.B. Gurken, Tomaten, Bohnen, Auberginen, Kürbisse; Melonen wie Wassermelonen, Cantaloup-Melonen, Gewürze wie Chilli; Tee |
| Scirthothrips dorsalis | |
| Scirthothrips citri | |
| Kakothrips pisivora | in Gemüse wie z.B. Erbsen, Bohnen |

### Beispiel 3 (nicht erfindungsgemäss)

Ca. 10 m² große Parzellen mit Gurken der Sorte "Pointsett" werden in drei Replikationen gegen Thrips palmi behandelt. Dabei wird der Wirkstoff Beispiel (I-2) (050 SL) und der kommerzielle Standard Imidacloprid (100 SL) in den angegebenen Aufwandmengen angegossen. Das Gießvolumen beträgt 50 ml/Pflanze.

Die Auswertung erfolgt 14, 15 und 18 Tage nach der Behandlung, indem man die Abtötung der Tiere (Nymphen) an den Blättern bonitiert.

| Wirkstoff | Aufwandmenge mg a.i./Pfl. | Wirkstoff (% Abbott) | | |
|---|---|---|---|---|
| | | 14 d | 15 d | 18 d |
| Imidacloprid | 20 | 100 | 97.2 | 89.9 |
| Beispiel (I-2) | 10 | 98.6 | 100 | 98.7 |

### Zwergzikaden (Cicadellidae) und Hornzikaden (Delphacidae)

Weiterhin ganz besonders bevorzugt ist die Bekämpfung folgender Arten aus den Familien der Zwergzikaden (Cicadellidae) und Hornzikaden (Delphacidae) in folgenden Kulturen:

| | |
|---|---|
| Empoasca devastans | in Gemüse wie Paprika, Tomaten, Gurken, Kohl z.B. Broccoli, Bohnen, Salat, Auberginen, Zucchini, Kürbisse, Sellerie, Erbsen, in Beerenfrüchten, in Melonen z.B. Wassermelonen, Netzmelonen, Cantaloup-Melonen, in Zierpflanzen wie Rosen, Hibiskus, in Zitrus wie Orangen, Mandarinen, Grapefruits sowie in Kartoffeln und in tropischen Kulturen wie z.B. Papayas, Bananen, Baumwolle, Tee, Wein, Nüsse wie z.B. Erdnüsse, Pecannüsse, |
| Empoasca fabae | |
| Empoasca flavescens | |
| Empoasca kraemeri | |
| Empoasca onukui | |
| Empoasca biguttula | |
| Empoasca vitis | |
| Idioscopus clypealis | in Gemüse wie Paprika, Tomaten, Gurken, Bohnen, Kürbisgewächse, Auberginen, Zucchini, Kohl, in Beerenfrüchten, in Melonen z.B. Wassermelonen, Netzmelonen, Cantaloup-Melonen, in Zierpflanzen, in tropischen Kulturen wie z.B.Mangos, Bananen |
| Idioscopus niveosparsus | |
| Idioscopus nitidulus | |
| Oncometopia fascialis | in Melonen sowie in Zierpflanzen wie z.B. Rosen, Hibiskus, Zitrus wie z.B. Orangen, Nüsse wie Pistazien |
| Oncometopia nigricans | |
| Erythroneura apicalis | in Wein |
| Erythroneura eburnea | |
| Erythroneura elegantulus | |
| Erythroneura variabilis | |
| Homalodisca cougulata | in Zitrus wie Orangen, Mandarinen, Zitronen, Grapefruits, Limetten, Kumquats, Wein |
| Circulifer tenellus | in Gemüse wie z.B. Kürbisse |
| Dalbus maidis | in Gemüse z.B. Buschbohnen |
| Nephotttix cinticeps | in Reis |
| Nilaparvata lugens | in Reis |
| Sogatella furcifera | in Reis |
| Laodelphax striatellus | in Reis |

### Minierfliegen (Agromyzidae)

Weiterhin ganz besonders bevorzugt ist die Bekämpfung folgender Arten aus der Familie der Minierfliegen (Agromyzidae) in folgenden Kulturen:

| | |
|---|---|
| Liriomyza brassicae | in Gemüse wie Paprika, Tomaten, Gurken, Kohl, Bohnen, Salat, Auberginen, Zucchini, Kürbisse, in Melonen z.B. Wassermelonen, Netzmelonen, Cantaloup-Melonen, in Zierpflanzen wie Rosen, Hibiskus, sowie in Kartoffeln, Bohnen |
| Liriomyza bryoniae | |
| Liriomyza cepae | |
| Liriomyza chilensis | |
| Liriomyza hunidobrensis | |
| Liriomyza sativae | |
| Liriomyza trifolii | |
| Liriomyza quadrata | |
| Pegomya hyoscyami | in Gemüse |
| Pegomya spinaciae | |

### Gallmücken (Cecidomyiidae)

Außerdem ganz besonders bevorzugt ist die Bekämpfung folgender Arten aus der Familie der Gallmücken (Cecidomyiidae):
Dasineura brassicae, Dasineura mali, Dasineura piri in Möhren, Knollen-, Wurzel- und Stängelgemüse wie z.B. Spargel, Fruchtgemüse wie z.B. Paprika, Tomaten, Gurken; Kartoffeln, Baumwolle, Kohlgemüse, Kernobst, Gewürze.

Prodiplosis vaccinii, Prodiplosis longifila, Thecodiplosis brachyntera, Thecodiplosis japonensis, Sitodiplosis mosellana, Haplodiplosis equestris in Gemüse wie z. B. Fruchtgemüse (Tomaten, Paprika), Citrus (z. B. Limonen, Orangen, Grapefruits, Clementinen), Getreide (z.B. Weizen, Gerste), Koniferen und Forst.

Contarinia lycopersici, Contarinia maculipennis, Contarinia humuli, Contarinia johnsoni, Contarinia nasturti, Contarinia okadai, Contarinia tritici, Contarinia pisi, Contarinia sorghicola, Contarinia medicaginis, Contarinia mali in Gemüse wie z. B. Kohlgemüse, Fruchtgemüse; Getreide wie z. B. Weizen, Sorghum; Kernobst; Hopfen.

### Fruchtfliegen (Tephritidae)

Weiterhin ganz besonders bevorzugt ist die Bekämpfung folgender Arten aus der Familie der Fruchtfliegen (Tephritidae) in folgenden Kulturen:

| | |
|---|---|
| Anastrepha fraterculus | in Gemüse wie z.B. Paprika, Tomaten, Gurken, Bohnen, Auberginen, Zucchini, Kürbisse, in Beerenfrüchten, z.B. Erdbeeren, in Melonen z.B. Wassermelonen, Netzmelonen, Cantaloup-Melonen, in Kernobst, Steinobst, in Zierpflanzen wie Rosen, Hibiskus, Chrysanthemen sowie in Kartoffeln, Wein und in tropischen Kulturen wie z.B. Papayas, Avocado, Guave, Mangos, in Citrus wie z. B. Orangen, Klementinen, Grapefruits |
| Anastrepha ludens | |
| Anastrepha striata | |
| Anastrepha oligua | |
| Anastrepha distineta | |
| Ceratitis capitata | in Baumwolle, in Gemüse wie z.B. Paprika, Tomaten, Gurken, Bohnen, Kürbisgewächse, Auberginen, Zucchini, Kohl, Lauch, Zwiebeln, in Beerenfrüchten, in Melonen z.B. Wassermelonen, Netzmelonen, in Kern- und Steinobst, in Zierpflanzen wie z.B. Rosen, Hibiskus, in tropischen Kulturen wie z.B. Papayas, Kakis Ananas, Bananen, Kartoffeln, Wein, in Citrus wie z. B. Orangen, Klementinen, Grapefruits |
| Ceratitis cosyra | |
| Ceratitis rosa | |
| Dacus oleae | in Gemüse wie z.B. Tomaten, Paprika, Bohnen, Gurken, Kürbisse, Auberginen, in Melonen sowie in Zierpflanzen wie z.B. Rosen, Hibiskus, Azaleen; tropische Kulturen wie Kakis, Guaven, Zitrus wie z.B. Zitronen, Orangen; Wein, Oliven, Beerenfrüchte wie z. B. Erdbeeren |
| Dacus ciliatus | |
| Dacus dorsalis | |
| Dacus cucurbitae | |
| Dacus tyroni | |
| Dacus tsuseonis | |
| Rhagoletis cerasi | in Zitrus wie z.B. Orangen, Zitronen, Grapefruits, Mandarinen, Zierpflanzen, Gemüse wie z.B. Gurken, Tomaten, Bohnen, Auberginen, Kürbisse; Melonen wie Wassermelonen, Cantaloup-Melonen; Kern- und Steinobst; Beerenfrüchte wie z. B. Erdbeeren |
| Rhagoletis completa | |
| Rhagoletis pomonella | |

### Miniermotten (Gracillaridae)

Außerdem ganz besonders bevorzugt ist die Bekämpfung folgender Arten aus der Unterfamilie der Miniermotten (Phyllocnistinae) in folgenden Kulturen:

| Phyllocnistis citrella | in Zitrus wie Orangen, Klementinen, Grapefruits, Zitronen. |
|---|---|
| Lithocolletis ringoniella | in Kern- und Steinobst, Nüssen |
| Lithocolletis crataegella | |
| Lithocolletis coryfoliella | |
| Leucoptera coffeella | in Kaffee |

### Spinnmilben (Tetranychidae), Gallmilben (Eriophydae)

Außerdem ganz besonders bevorzugt ist die Bekämpfung folgender Arten aus der Familie der Spinnmilben (Tetranychidae) und der Gallmilben (Eriophydae) in folgenden Kulturen:

| | |
|---|---|
| Tetranychus urticae | in Gemüse wie Paprika, Tomaten, Auberginen, Gurken, Melonen, Zucchini, Kürbisse, in Zierpflanzen wie Rosen, Azaleen; Hopfen, Tee |
| Tetranychus cinnabarinus | |
| Tetranychus canadensis | |
| Tetranychus pacificus | |
| Tetranychus tumidus | |
| Tetranychus kanzawai | |
| Panonychus ulmi | in Gemüse wie Tomaten, Auberginen, Paprika, Kernobst, Steinobst |
| Pananychus citri | in Zitrus wie Orangen, Klementinen |
| Aculops lapponicus | in Gemüse wie Tomate; Zierpflanzen wie Fuchsien |
| Aculops lycopersici | |
| Aculops pelekassi | |
| Aculops fuchsiae | |

### Beispiel 4 (nicht erfindungsgemäss)

Ca. 10 m² große Parzellen mit Tomaten der Sorte "Rodade" werden in drei Replikationen gegen Tetranychus urticae behandelt. Dabei werden die Wirkstoffe Beispiel (I-2) (050 SL) in den angegebenen Aufwandmengen angegossen und der Standard Aldicarb als Granulat appliziert. Das Gießvolumen beträgt 30 ml/Pflanze.

Die Auswertung erfolgt 33, 47 und 55 Tage nach der Behandlung, indem man die Abtötung der Tiere auf den Blättern bonitiert.

| Wirkstoff | Aufwandmenge mg a.i./Pfl. | Abtötung (% Abbott) | | |
|---|---|---|---|---|
| | | 33 d | 47 d | 55 d |
| Aldicarb | 20 | 100 | 99 | 99 |
| Beispiel (I-2) | 5 | 99 | 95 | 88 |

Bevorzugt werden die Verbindungen der Formel (I) nach Dripanwendung gegen tierische Schädlinge aus den folgenden Schädlingsfamilien eingesetzt:
Bevorzugt sind aus der Familie der Blasenläuse (Pemphigidae): Eriosoma spp., Pemphigus spp., in Kulturen wie z.B. Zitrus, Kernobst, Steinobst, Blattgemüse, Wurzel- und Knollengemüse und Zierpflanzen.

Bevorzugt sind aus der Familie der Wurzelläuse (Phylloxeridae): Phylloxera spp. in Wein, Nüssen, Zitrus.

Bevorzugt sind aus der Familie der Blattflöhe (Psyllidae): Psylla spp., Paratrioza spp., Tenalaphara spp., Diaphorina spp., Trioza spp., in Kulturen wie z.B. Kernobst, Steinobst, Zitrus, Gemüse, Kartoffeln, in tropischen Kulturen.

Bevorzugt sind aus der Familie der Napfschildläuse (Coccidae): Ceroplastes spp., Drosicha spp. Pulvinaria spp., Protopulminaria spp., Saissetia spp., Coccus spp., in mehrjährigen Kulturen wie z.B. Zitrus, Kernobst, Steinobst, Oliven, Wein, Kaffee, Tee, tropischen Kulturen, Zierpflanzen, Gemüse.

Bevorzugt sind aus der Familie der Deckelschildläuse (Diaspididae): Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in Kulturen wie z.B. Zitrus, Kernobst, Steinobst, Mandeln, Pistazien, Nüssen, Oliven, Tee, Zierpflanzen, Wein, tropischen Kulturen.

Bevorzugt sind aus der Familie der Röhrenschildläuse (Ortheziidae): Orthezia spp. in Zitrus, Kernobst, Steinobst.

Bevorzugt sind aus der Familie der Schmier- und Wollläuse (Pseudococcidae): Pericerga, Pseudococcus spp., Planococcus spp., Dysmicoccus spp., in Kulturen wie z.B. Zitrus, Stein- und Kernobst, Tee, Wein, Gemüse, Zierpflanzen und tropischen Kulturen.

Weiterhin bevorzugt sind aus der Familie der Mottenschildläuse (Aleyrodidae): Bemisia tabaci, Bemisia argentifolii, Trialeurodes vaporariorum, Aleurothrixus floccosus, Aleurodes spp., Dialeurodes spp., Parabemisia myricae in Kulturen wie z.B. Gemüse, Melonen, Kartoffeln, Tabak, Beerenfrüchten, Zitrus, Zierpflanzen, Baumwolle, Soja und tropischen Kulturen.

Außerdem bevorzugt sind aus der Familie der Röhrenläuse (Aphidae):
Myzus spp. in Tabak, Steinobst, Beerenfrüchten, Fruchtgemüse, Blattgemüse, Knollen- und Wurzelgemüse, Melonen, Kartoffeln, Zierpflanzen, Gewürze,
Acyrthosiphon onobrychis in Gemüse,
Aphis spp. in Tabak, Zitrus, Kernobst, Steinobst, Melonen, Erdbeeren, Beerenfrüchten, Fruchtgemüse, Blattgemüse, Kohlgemüse, Knollen-, Stangen- und Wurzelgemüse, Zierpflanzen, Kartoffeln, Kürbisse, Gewürze,
Rhodobium porosum in Erdbeeren,
Nasonovia ribisnigri in Blattgemüse,
Macrosiphum spp. in Zierpflanzen, Kartoffeln, Blatt-, Kohl- und Fruchtgemüse, Erdbeeren,
Phorodon humuli in Hopfen,
Brevicoryne brassicae in Blattgemüse,
Toxoptera spp.in Zitrus, Steinobst, Mandeln, Nüssen, Gewürzen,
Aulacorthum spp. in Zitrus, Kartoffeln, Frucht- und Blattgemüse,
Anuraphis cardui in Gemüse,
Brachycaudus helycrisii in Sonnenblumen,
Acyrthosiphon onobrychis in Gemüse.

Bevorzugt sind ebenfalls aus der Familie der Thripse (Thripidae): Anaphothrips spp., Baliothrips spp., Caliothrips spp., Frankliniella spp., Heliothrips spp., Hercinothrips spp., Rhipiphorothrips spp., Scirtothrips spp., Kakothrips spp., Selenothrips spp. und Thrips spp., in Kulturen wie z.B. Obst, Baumwolle, Wein, Tee, Nüsse, tropischen Kulturen, Zierpflanzen, Coniferen, Tabak, Gewürze, Gemüse, Beerenfrüchte, Melonen, Zitrus und Kartoffeln.

Bevorzugt sind außerdem aus den Familien der Minierfliegen (Agromyzidae) und Blumenfliegen (Anthomyiidae): Agromyza spp., Amauromyza spp., Atherigona spp., Chlorops spp., Liriomyza spp., Oscinella spp., Pegomyia spp. in Kulturen wie z.B. Gemüse, Melonen, Kartoffeln, Nüsse, Zierpflanzen.

Bevorzugt sind aus den Familien der Zwergzikaden (Cicadellidae) und Hornzikaden (Delphacidae); Circulifer spp., Dalbus spp., Empoasca spp., Erythroneura spp., Homalodisca spp., Iodioscopus spp., Laodelphax spp., Nephotettix spp., Nilaparvata spp., Oncometopia spp., Sogatella spp., in Kulturen wie z.B. Zitrus, Obst, Wein, Kartoffeln, Gemüse, Zierpflanzen, Coniferen, Melonen, Beerenfrüchte, Tee, Nüssen, Reis und tropischen Kulturen.

Bevorzugt sind aus der Familie der Miniermotten (Gracillariidae):
Caloptilia spp., Gracillaria spp., Lithocolletis spp., Leucoptera spp., Phtorimaea spp., Phyllocnistis spp. in Kulturen wie Kernobst, Steinobst, Wein, Nüsse, Zitrus, Koniferen, Kartoffeln, Kaffee.

Bevorzugt sind aus der Familie der Gallmücken (Cecodomyiidae):
Contarinia spp., Dasineura spp., Diplosis spp., Prodiplosis spp., Thecodiplosis spp., Sitodiplosis spp., Haplodiplosis spp. in Kulturen wie Zitrus, Kernobst, Steinobst, Gemüse, Kartoffeln, Gewürze, Beerenobst, Koniferen, Hopfen.

Ebenso bevorzugt sind aus der Familie der Fruchtfliegen (Tephritidae):
Anastrepha spp., Ceratitis spp., Dacus spp., Rhagoletis spp. in Kulturen wie Gemüse, Beerenfrüchte, Melonen, Kern- und Steinobst, Zierpflanzen, Kartoffeln, Wein, tropischen Kulturen, Zitrus, Oliven.
Außerdem bevorzugt sind Milben aus den Familien der Spinnmilben (Tetranychidae) und der Gallmilben (Eriophydae):
   Tetranychus spp., Panonychus spp., Aculops spp. in Kulturen wie Gemüse, Kartoffeln, Zierpflanzen, Zitrus, Wein, Koniferen.

Die Erfindung wird durch die folgenden Beispiele erläutert. Diese sind in keiner Weise beschränkend aufzufassen.

### Anwendungsbeispiele Dripanwendung (erfindungsgemäss)

### Blasenläuse (Pemphigidae)

Ganz besonders bevorzugt ist die Bekämpfung folgender Arten aus der Familie der Blasenläuse (Pemphigidae):
Eriosoma lanigerum in Kernobst, wie z.B. Äpfeln, Birnen und Steinobst wie z.B. Kirschen, Pflaumen, Zwetschgen,
Eriosoma pyricola in Kernobst wie z.B. Äpfeln und Birnen
Pemphigus bursarius in Zierpflanzen, wie z.B. Chrysanthemen, in Gemüse wie z.B. Kopfsalat
Pemphigus fuscicornis in Rüben, Blattgemüse, wie z.B. Kopfsalat, Wurzelgemüse wie z.B. Möhren, Zierpflanzen wie z.B. Chrysanthemen

### Wurzeläuse (Phylloxeridae)

Ganz besonders bevorzugt ist die Bekämpfung folgender Arten aus der Familie der Wurzelläuse (Phylloxeridae):
Phylloxera devastatrix in Wein, in Nüssen wie z.B. Pekannüssen,
Phylloxera vastatrix, (≙ Viteus vitifolii) in Wein.

### Blattflöhe (Psyllidae)

Ganz besonders bevorzugt ist die Bekämpfung folgender Arten aus der Familie der Blattflöhe (Psyllidae): Psylla pyricola in Kernobst wie z.B. Birnen, Äpfeln, in Steinobst wie z.B. Kirschen, Pflaumen, Zwetschgen, Pfirsichen, Nektarinen,
Psylla piri in Kernobst wie z.B. Birnen,
Psylla pyrisuga in Kernobst wie z.B. Birnen,
Psylla costalis in Kernobst wie z.B. Äpfeln,
Paratrioza cockerelli in Fruchtgemüse wie z.B. Tomaten, Paprika, Chillis, in Wurzelgemüse wie z.B. Möhren, in Kartoffeln,
Tenalaphara malayensisin tropischen Kulturen wie z.B. Durians (Stinkfrüchte),
Diaphorina citri in Zitrus wie z.B. Orangen, Mandarinen, Limonen, Grapefruits,
Bactericera cockerelli in Fruchtgemüse wie z.B. Paprika,
Trioza erythrae in Zitrus wie z.B. Orangen, Grapefruits.

### Beispiel 5 (erfindungsgemäss)

Ca. 35 m² Parzellen mit Limettenbäumchen der Sorte Volkamericano", (3 Jahre, Pflanzenwachstumsstadium BBCH 38), werden in drei Replikationen gegen Diaphorina citri (DIAACI) mit 250 ml/halmch einer Wirkstofflösung enthaltend den Wirkstoff Beispiel (I-2) (200 SL) und zum Vergleich mit 143 ml/halmch (350 SC) des Standards Imidacloprid mittels Dripper mit einer Wasseraufwandmenge von 2l/Pflanze behandelt und anschließend 2h nachbewässert. Die Auswertung erfolgt 3, 7 und 14 Tage nach der Behandlung mittels Zählung lebender Nymphen auf jeweils 5 Zweigen. Die Wirksamkeit wird mit Hilfe der Abbott-Formel ermittelt.

| Aufwandmenge (50g/ha/mch Wirkstoff) | Wirksamkeit (%) Abbott gegen DIAACI (Nymphs) | | | | |
|---|---|---|---|---|---|
| | 3 d | 7 d | 14 d | | |
| Imidacloprid | 90.8 | 66.5 | 0 | | |
| Beispiel (I-2) | 73.0 | 93.6 | 100 | | |

### Beispiel 5A (erfindungsgemäss)

Ca. 1.92 m² Parzellen mit Paprika der Sorte Rey Pakal F1 (Pflanzenwachstumsstadium BBCH 78) werden in drei Replikationen gegen Bactericera cockerelli (PARZCO) mit 1000 ml/ha einer Wirkstofflösung, enthaltend den Wirkstoff Beispiel (I-2) (200 SL) und zum Vergleich mit 571 ml/ha des Standards Imidacloprid /(SC350) mittels Dripper behandelt. Die Auswertung erfolgt 7, 15 und 21 Tage nach der Behandlung durch Auszählen lebender Nymphen auf jeweils 10 Blättern. Die Wirksamkeit wird mit Hilfe der Abbott-Formel ermittelt.

| Aufwandmenge 200g/ha | Wirksamkeit (%) Abbott gegen PARZCO (Nymphs) | | | | |
|---|---|---|---|---|---|
| | | 7 d | 145d | 21 d | |
| Imidacloprid | | 60.3 | 55.7 | 7.2 | |
| Beispiel (I-2) | | 68.5 | 57.1 | 53.8 | |

### Napfschildläuse (Coccidae)

Ganz besonders bevorzugt ist die Bekämpfung folgender Arten aus der Familie der Napfschildläuse (Coccidae) in folgenden Kulturen:

| | |
|---|---|
| Ceroplastes ceriferus | in Zitrus wie z.B. Orangen, Grapefruits, Mandarinen, Zitronen, Limetten, Satsumas |
| Ceroplastes floridensis | |
| Ceroplastes rubens | |
| Ceroplastes rusci | |
| Drosicha mangiferae | in tropischen Kulturen, z.B. Mangos |
| Drosicha stebbengii | |
| Pulvinaria aurantii | in Zitrus wie z.B. Orangen, Grapefruits, Mandarinen, Zitronen, Limetten, Satsumas, in Wein |
| Pulvinaria aethiopicus | |
| Pulvinaria vitis | |
| Protopulminaria pyriformis | in Kern- und Steinobst, |
| Saissetia oleae | in Zitrus wie z.B. Orangen, Grapefruits, Mandarinen, Limetten, in Zitrus wie z.B. Zitronen, Satsumas, in Oliven, in tropischen Kulturen z.B. Bananen |
| Saissetia nigra | |
| Coccus viridis, Coccus pseudomagnoliarum | in Zitrus wie z.B. Orangen, Mandarinen, Grapefruits, Limetten, Zitronen, Satsumas, in tropischen Kulturen, z.B. Ananas |
| Coccus hesperdium | in Kernobst wie z.B. Äpfeln, Birnen, in Steinobst wie z.B. Pfirsichen, Nektarinen, Pflaumen, Aprikosen, Kirschen, in Kaffee, in Oliven, in Tee, in Gemüse wie z.B. Bohnen, in Wein |

### Beispiel 5B (erfindungsgemäss)

Orangenbäume mit ca. 3.6m Kronenhöhe der Sorte Washington Navel (Pflanzenwachstumsstadium BBCH 71), werden in drei Replikationen gegen Coccus pseudomagnoliarum (COCCPS) mit 250 ml/ha einer Wirkstofflösung enthaltend den Wirkstoff Beispiel (I-2) (200 SL) und zum Vergleich mit 511 ml/ha der Standards Imidacloprid (550SC) und 208ml Spirotetramat (240SC) mittels Dripper mit einer Wasseraufwandmenge von 2806 l/ha behandelt. Es werden zwei Anwendungen im Abstand von 42d durchgeführt.

Die Auswertung erfolgt 14, 43 und 77 Tage nach der 2. Behandlung durch Auszählung lebender beweglicher Nymphen auf jeweils 10 Blättern. Die Wirksamkeit wird mit Hilfe der Abbott-Formel ermittelt.

| Aufwandmenge | Wirksamkeit (%) Abbott gegen COCCPS (Nymphen)/10 Blätter | | | | |
|---|---|---|---|---|---|
| | 14d | 43d | 77d | | |
| Imidacloprid (281,3g/ha Wirkstoff | 71.6 | 63.2 | 0 | | |
| Spirotetramat (50g/ha Wirkstoff ) | 21.4 | 55.5 | 0 | | |
| Beispiel (I-2) (50g/ha Wirkstoff) | 79.5 | 95.0 | 100 | | |

### Deckelschildläuse (Diaspididae)

Ganz besonders bevorzugt ist die Bekämpfung folgender Arten aus der Familie der Deckelschildläuse (Diaspididae) in folgenden Kulturen:

| | |
|---|---|
| Quadraspidiotus perniciosus | in Zitrus wie z.B. Orangen, Mandarinen, Limonen, Grapefruits, in Kernobst wie z.B. Äpfeln, Birnen, Quitten, in Steinobst wie z.B. Pfirsichen, Nektarinen, Aprikosen, Pflaumen, Kirschen, in Nüssen wie z.B. Mandeln, Pistazien, Wallnüsse, Haselnüsse, in Zierpflanzen wie z.B. Sträuchern, Koniferen, Topfpflanzen, in tropischen Kulturen, z.B. Litschies |
| Quadraspidiotus juglansregiae | |
| Aonidiella aurantii | in Zitrus wie z.B. Orangen, Mandarinen, Grapefruits, Limetten, Zitronen, Satsumas |
| Aonidiella citrina | |
| Lepidosaphes ulmi | in Zitrus wie z.B. Orangen, Mandarinen, Grapefruits, Limetten, Zitronen, Satsumas, in Kernobst wie z.B. Äpfeln und Birnen, in Steinobst wie z.B. Pfirsiche, Nektarinen, Pflaumen, Aprikosen, Kirschen, |
| Lepidosaphes beckii | |
| Aspidiotus destructor | in Zitrus wie z.B. Orangen, Mandarinen, Grapefruits, Limetten, Zitronen, Satsumas, in Zierpflanzen wie z.B. Sträuchern, Topfpflanzen, in Oliven, in tropischen Kulturen, z.B. Mangos, Limonen, |
| Aspidiotus hederae | |
| Aspidiotus nerii | |
| Aspidiotus ficus | |
| Pseudaulacaspis pentagona | in Kernobst wie z.B. Äpfel, Birnen, in Steinobst wie z.B. Pfirsiche, Aprikosen, Nektarinen, Kirschen, Pflaumen, Zwetschgen, in Tee, |
| Unaspis yanonensis | in Zitrus wie z.B.Orangen, Mandarinen, Limetten, Grapefruits, Zitronen, Satsumas, in tropischen Kulturen, z.B. Ananas, Mangos, |
| Unaspis citri | |
| Pinnaspis aspidistrae | |
| Parlatoria ziziphus | in Zitrus wie z.B. Orangen, Mandarinen, Limetten, Zitronen, Satsumas, Grapefruits, in Oliven, |
| Parlatoria pergandei | |
| Parlatoria oleae | |
| Selenaspidus articulatus | in Zitrus wie z.B. Orangen, Mandarinen, Limetten, Grapefruits, Zitronen, Satsumas |
| Diaspis sp. | in Kernobst wie z.B. Äpfel, Birnen, in Steinobst wie z.B. Pfirsiche, Aprikosen, Nektarinen, Kirschen, Pflaumen, Zwetschgen, in Zitrus wie z.B. Orangen, Mandarinen, Limetten, Grapefruits, Zitronen, Satsumas, in Zierpflanzen |

### Beispiel 6 (erfindungsgemäss)

Ca. 16 m² Parzellen mit Orangenbäumchen der Sorte Naval (Pflanzenwachstumsstadium BBCH 72), werden in drei Replikationen gegen Aonidiella aurantii (AONDAU) mit 750 ml/ha einer Wirkstofflösung enthaltend den Wirkstoff Beispiel (I-2) (200 SL) und zum Vergleich mit 272.5 ml/ha (550 SC) des Standards Imidacloprid mittels Dripper mit einer Wasseraufwandmenge von 400 l/ha/mch behandelt. Die Auswertung erfolgt 14, 47 und 152 Tage nach der Behandlung durch Auszählung lebender beweglicher Larven und bereits festgesetzter Larven mit ausgebildeten Schilden auf jeweils 10 Früchten oder 100 Blättern. Die Wirksamkeit wird mit Hilfe der Abbott-Formel ermittelt.

| Aufwandmenge (150g/ha Wirkstoff) | Wirksamkeit (%) Abbott gegen AONDAU (gem. Population)/**100 Blätter** | | | | |
|---|---|---|---|---|---|
| | 14 d | 47 d | 152 d | | |
| Imidacloprid | 93.3 | 93,5 | 76.3 | | |
| Beispiel (I-2) | 93.3 | 100 | 100 | | |

| Aufwandmenge (150g/ha Wirkstoff) | Wirksamkeit (%) Abbott | | | | |
|---|---|---|---|---|---|
| | gegen AONDAU (gem. Population)/**10 Früchte** | | | | |
| | 47 d | 101 d | 152 d | | |
| Imidacloprid | 78.9 | 36.4 | 21.7 | | |
| Beispiel (I-2) | 89.5 | 95.5 | 100 | | |

### Beispiel 6A (erfindungsgemäss)

Pfirsichbäume mit ca. 2.5m Kronenhöhe der Sorte Sweet Cap (Pflanzenwachstumsstadium BBCH 73) werden in drei Replikationen gegen Diaspis sp. (DIASSP) mit 1000 ml/ha einer Wirkstofflösung enthaltend den Wirkstoff Beispiel (I-2) (200 SL) und zum Vergleich mit 1000ml Spirotetramat (100SC) mittels Dripper mit einer Wasseraufwandmenge von 4000 l/ha behandelt.

Die Auswertung erfolgt 14 und 61 Tage nach der Behandlung durch Auszählung lebender beweglicher Tiere auf jeweils 10 Zweigen. Die Wirksamkeit wird mit Hilfe der Abbott-Formel ermittelt.

| Aufwandmenge | Wirksamkeit (%) Abbott | | | | |
|---|---|---|---|---|---|
| | gegen DIASSP (Tiere)/**10 Blätter** | | | | |
| | 14 d | 61d | | | |
| Spirotetramat (100g/ha Wirkstoff ) | 72.1 | 89.6 | | | |
| Beispiel (I-2) (200g/ha Wirkstoff) | 83.2 | 93.3 | | | |

### Beispiel 6B (erfindungsgemäss)

Pfirsichbäume mit ca. 3m Kronenhöhe (Pflanzenwachstumsstadium BBCH 72) werden in drei Replikationen gegen Quadraspidiotus perniciosus. (QUADPE) mit 667 ml/ha einer Wirkstofflösung enthaltend den Wirkstoff Beispiel (I-2) (225SC) und zum Vergleich mit 455 ml/ha Imidacloprid (550SC) mittels Dripper mit einer Wasseraufwandmenge von 337 l/ha behandelt.

Die Auswertung erfolgt 15, 21und 29 Tage nach der Behandlung durch Auszählung lebender beweglicher Tiere. Die Wirksamkeit wird mit Hilfe der Abbott-Formel ermittelt.

| Aufwandmenge | Wirksamkeit (%) Abbott | | | | |
|---|---|---|---|---|---|
| | gegen QUADPE (Tieren) | | | | |
| | 14 d | 21d | 29d | | |
| Imidacloprid (250g/ha Wirkstoff ) | 86.5 | 94 | 78.1 | | |
| Beispiel (I-2) (150g/ha Wirkstoff) | 85.4 | 96 | 78.1 | | |

### Röhrenschildläuse (Ortheziidae)

Ganz besonders bevorzugt ist die Bekämpfung folgender Arten aus der Familie der Röhrenschildläuse (Ortheziidae) in folgenden Kulturen:

| | |
|---|---|
| Orthezia praelonga | in Zitrus wie z.B. Orangen, Mandarinen, Limetten, Grapefruits, Zitronen, Satsumas, Apfelsinen |

### Schmier- und Wollläuse (Pseudococcidae)

Ganz besonders bevorzugt ist die Bekämpfung folgender Arten aus der Familie der Schmier- und Wollläuse (Pseudococcidae) in folgenden Kulturen:

| | |
|---|---|
| Pseudococcus citri | in Zitrus wie z.B. Orangen, Mandarinen, Grapefruits, Limetten, Zitronen, Satsumas, in Kernobst wie z.B. Äpfeln und Birnen, in Wein, in Zierpflanzen, in tropischen Kulturen wie z.B. Ananas, |
| Pseudococcus comstocki | |
| Pseudococcus maritimus | |
| Dysmicoccus boninsis | in Kernobst wie z.B. Äpfeln, Birnen, in Tee, in tropischen Kulturen wie z.B. Ananas, Guyabano, |
| Dysmicoccus cryptus | |
| Dysmicoccus brevipes | |

| | |
|---|---|
| Planococcus lilacinus | in Zitrus wie z.B. Orangen, Mandarinen, Grapefruits, Limetten, Zitronen, Satsumas, in Wein, |
| Planococcus citri | |
| Planococcus ficus | |
| Pericerga purchasi | in Zitrus wie z.B. Orangen, Mandarinen, Grapefruits, Limetten, Zitronen, Satsumas |
| Phenacoccus manihote | in Baumwolle, Kernobst, z. B Apfel, Wein, Maniok, Zierpflanzen |
| Phenacoccus selenopsis | |
| Phenacoccus madeirensis | |
| Phenacoccus aceris | |

### Beispiel 7 (erfindungsgemäss)

Ca. 4.6 m² Parzellen mit Weinreben der Sorte Thompson (Pflanzenwachstumsstadium BBCH 79)), werden in drei Replikationen gegen Planococcus sp. (PLANSP) mit 250ml/ha einer Wirkstofflösung enthaltend den Wirkstoff Beispiel (I-2) (200 SL) und zum Vergleich mit ca. 91 ml/ha (550 SC) des Standards Imidacloprid mittels Dripper mit einer Wasseraufwandmenge von ca.7.5 l/qm behandelt. Die Auswertung erfolgt 22, 36 und 65 Tage nach der Behandlung durch Auszählung lebender Schmierläuse an den Stämmen. Die Wirksamkeit wird mit Hilfe der Abbott-Formel ermittelt.

| Aufwandmenge (50g/ha Wirkstoff) | Wirksamkeit (%) Abbott | | | | |
|---|---|---|---|---|---|
| | gegen PLANSP | | | | |
| | 22 d | 36 d | 65 d | | |
| Imidacloprid | 14.3 | 81.3 | 84.6 | | |
| Beispiel (I-2) | 71.4 | 96.9 | 92.3 | | |

### Beispiel 7A (erfindungsgemäss)

Orangenbäumce mit ca. 2m Kronenhöhe der Sorte Navel (Pflanzenwachstumsstadium BBCH 73) werden in drei Replikationen gegen Pseudococcus citri (PSECCI) mit 165 g/ha (60.7 SG) enthaltend den Wirkstoff Beispiel (I-2) und zum Vergleich mit 214 g/ha (70WG) Imidacloprid mittels Dripper mit einer Wasseraufwandmenge von 20000 l/ha behandelt. Es wurden zwei Behandlungen im Abstand von 56d durchgeführt.

Die Auswertung erfolgt 55 und 93 Tage nach der 1. Behandlung durch Auszählung lebender beweglicher Tiere auf jeweils 100 Früchten. Die Wirksamkeit wird mit Hilfe der Abbott-Formel ermittelt.

| Aufwandmenge | Wirksamkeit (%) Abbott | | | | |
|---|---|---|---|---|---|
| | gegen PSECCI (Tieren) | | | | |
| | 55 d | 93d | | | |
| Imidacloprid (150g/ha Wirkstoff ) | 71.2 | 63.2 | | | |
| Beispiel (I-2) (100g/ha Wirkstoff) | 89.2 | 93.2 | | | |

### Mottenschildläuse (Aleyrodidae)

Weiterhin ganz besonders bevorzugt ist die Bekämpfung folgender Arten aus der Familie der Mottenschildläuse (Aleyrodidae) in folgenden Kulturen:

| | |
|---|---|
| Bemisia tabaci | in Gemüse wie Paprika, Tomaten, Gurken, Kohl z.B. Broccoli, Bohnen, Salat, Auberginen, Zucchini, Kürbisse, in Beerenfrüchten, in Melonen z.B. Wassermelonen, Netzmelonen, Cantaloup-Melonen, in Zierpflanzen wie Rosen, Hibiskus, in Zitrus wie Orangen, Mandarinen, Grapefruits sowie in Kartoffeln, in Baumwolle, in Tabak und in tropischen Kulturen wie z.B. Papayas, Bananen, |
| Bemisia argentifolii | in Baumwolle, in Gemüse wie Paprika, Tomaten, Gurken, Bohnen, Sojabohnen, Kürbisgewächse, Auberginen, Zucchini, Kohl, in Beerenfrüchten, in Melonen z.B. Wassermelonen, Netzmelonen, Cantaloup-Melonen, in Zierpflanzen wie z.B. Rosen, Hibiskus, in tropischen Kulturen wie z.B. Papayas, Bananen, |
| Trialeurodes vaporariorum | in Gemüse wie Tomate, Paprika, Bohnen, Gurken, Kürbisse, Auberginen, in Beerenfrüchten, in Melonen sowie in Zierpflanzen wie z.B. Rosen, Hibiskus, |
| Aleurothrixus floccosus | in Zitrus wie Orangen, Mandarinen, Zitronen, Apfelsinen, |
| Aleurodes citri | in Zitrus wie Orangen, Mandarinen, Zitronen, Grapefruits, Limetten, Kumquats, |
| Aleurodes fragriae | in Beerenfrüchten, wie z.B. Erdbeeren |
| Aleurodes azaleae | in Zierpflanzen, wie z.B. Azaleen |

### Beispiel 8 (erfindungsgemäss)

Ca. 8 m² Parzellen mit Tomaten der Sorte "Diamante max." (Pflanzenwachstumsstadium BBCH 22), werden in drei Replikationen gegen Bemisia tabaci (BEMITA) mit 200 µl/Pflanze einer Wirkstofflösung, enthaltend den Wirkstoff Beispiel (I-2) (050 SL) und zum Vergleich mit 100 µL/Pflanze (100 SL) des Standards Imidacloprid mittels Dripper behandelt. Die Auswertung erfolgt 3, 7, 14 und 21 Tage nach der Behandlung durch Auszählen lebender Nymphen auf jeweils 20 Blättern. Die Wirksamkeit wird mit Hilfe der Abbott-Formel ermittelt.

| Aufwandmenge (mg Wirkstoff / Pflanze) | Wirksamkeit (%) Abbott | | | | |
|---|---|---|---|---|---|
| | gegen BEMITA (Nymphs) | | | | |
| | 3 d | 7 d | 14 d | 21 d | |
| Imidacloprid ; 10 | 27.8 | 57.4 | 20.3 | 27.8 | |
| Beispiel (I-2) ; 10 | 52.2 | 67.5 | 63.5 | 50.4 | |

### Beispiel 9 (erfindungsgemäss)

Ca. 6 m² Parzellen mit Aubergine der Sorte "Tomohauk" (Pflanzenwachstumsstadium BBCH 14), werden in drei Replikationen gegen Bemisia tabaci (BEMITA) mit 200 µL /Pflanze einer Wirkstofflösung, enthaltend den Wirkstoff Beispiel (I-2) (050 SL) und zum Vergleich mit 14,2 mg/Pflanze (WG 70) des Standards Imidacloprid mittels Dripper behandelt. Die Auswertung erfolgte 14, 21, 28, 35 und 42 Tage nach der Behandlung mittels Auszählung von lebenden Mymphen an jeweils 40 Blättern. Die Wirksamkeit wird mit Hilfe der Abbott-Formel ermittelt.

| Aufwandmenge (mg Wirkstoff/ Pflanze) | Wirksamkeit (%) Abbott gegen BEMITA (Nymphs) | | | | |
|---|---|---|---|---|---|
| | 14 d | 21 d | 28 d | 35 d | 42d |
| Imidacloprid ; 10 | 19.7 | 15.7 | 1.6 | 0 | 18.6 |
| Beispiel (I-2) ; 10 | 100 | 100 | 99.7 | 99.4 | 96.9 |

### Beispiel 10 (erfindungsgemäss)

Da sich während des Versuchs (siehe Beispiel 9) eine Thripspopulation von Thrips palmi (THRIPL) aufbaute, wurde diese ebenfalls bonitiert. Die Auswertung erfolgte 35 und 42 Tage nach der ersten Behandlung mittels Auszählung von lebenden Thripsen (alle Stadien) an jeweils 20 Blättern. Die Wirksamkeit wird mit Hilfe der Abbott-Formel ermittelt.

| Aufwandmenge (mg Wirkstoff/ Pflanze)) | Wirksamkeit (%) Abbott gegen THRIPL (gemischte Population) | | | | |
|---|---|---|---|---|---|
| | 35 d | 42 d | | | |
| Imidacloprid; 10 | 21.4 | 2.6 | | | |
| Beispiel (I-2); 10 | 70.2 | 66.9 | | | |

### Röhrenläuse (Aphididae)

Ganz besonders bevorzugt ist die Bekämpfung folgender Arten aus der Familie der Röhrenläuse in folgenden Kulturen:

| | |
|---|---|
| Myzus persicae | in Frucht- und Blattgemüse wie z.B. Paprika, Bohne, Aubergine, Tomaten, Melonen, Kopfsalat; Kartoffeln, Erdbeeren, in Zierpflanzen wie z.B. Rosen, Koniferen, Gewürze wie z. B. Chili; Tabak, Kernobst, Steinobst |
| Aphis gossypii | in Zitrus wie z.B. Orangen, Mandarinen, Grapefruits, in Fruchtgemüse wie z. B. Gurke, Kürbissen, Zucchini, Aubergine, Tomate, Paprika, Melonen; Erdbeeren, Gewürzen, Kartoffeln, Rüben, in Zierpflanzen wie z.B. Rosen; Koniferen, Baumwolle |
| Aphis craccivora | in Zierpflanzen wie z. B. Stiefmütterchen; Fruchtgemüse wie z. B. Erbsen |
| Aphis fabae | in Fruchtgemüse wie z. B. Bohnen, Erbsen; in Knollen-, Wurzel-und Stangengemüse wie z. B. Sellerie |
| Aphis glycine | in Soja |
| Rhodobium porosum | in Erdbeeren |
| Nasonovia ribisnigri | in Blattgemüse wie beispielsweise Kopfsalat |
| Macrosiphum rosae | in Zierpflanzen wie z.B. Rosen |
| Macrosiphum euphorbiae | in Blatt-, Frucht- und Kohlgemüse wie z.B. Auberginen, Salat, Paprika, Weißkohl, Tomaten; Kartoffeln, Erdbeeren |
| Phorodon humuli | in Hopfen |
| Aulacorthum solani | in Zitrus wie z.B. Orangen, Mandarinen, Grapefruits, Limetten; in Frucht- und Blattgemüse wie z.B. Kopfsalat, Tomaten, Paprika, Auberginen; Kartoffeln |
| Toxoptera citricola | in Zitrus, wie z.B. Orangen, Mandarinen, Limetten, Grapefruits |
| Toxoptera citricida | in Zitrus, wie z.B. Orangen, Mandarinen, Limetten, Grapefruits, |
| Toxoptera aurantii | in Zitrus wie z.B. Orangen, Mandarinen, Grapefruits, Limetten; in Gewürzen wie z.B. Pfeffer; in Nüssen wie z.B. Cashewnüssen |
| Toxoptera odinae | in Zitrus wie z.B. Orangen, Mandarinen, Grapefruits, Limetten; in Gewürzen wie z.B. Pfeffer; in Nüssen wie z.B. Cashewnüssen |
| Anuraphis cardui | in Gemüse wie z.B. Artischocken |
| Brachycaudus helycrisii | in Sonnenblumen |
| Brevicoryne brassicae | in Blattgemüse wie z.B. Kohl |
| Acyrthosiphon onobrychis | in Gemüse wie z.B. Erbsen |

### Beispiel 11 (erfindungsgemäss)

Ca. 12 m² Parzellen mit Zucchini der Sorte "President F1" (Pflanzenwachstumsstadium BBCH 61), werden in drei Replikationen gegen Aphis gossypii (APHIGO) mit 1000 ml/ha einer Wirkstofflösung enthaltend den Wirkstoff Beispiel (I-2) (200 SL) und zum Vergleich 1000 ml/ha des Standards Imidacloprid (200 SL) mittels Dripper mit einer Wasseraufwandmenge von 5000 l/ha behandelt. Die Anwendung erfolgt zweimal mit den oben angegebenen Mengen im Abstand von 22 Tagen*. Die Auswertung erfolgt 3, 8, 16, 22, 24, 28 und 35 Tage nach der ersten Behandlung durch Auszählen von lebenden Läusen (alle Stadien) auf jeweils 10 Pflanzen. Die Wirksamkeit wird mit Hilfe der Abbott-Formel ermittelt.

| Aufwandmenge (200g/ha Wirkstoff) | Wirksamkeit (%) Abbott gegen APHIGO (gemischte Population) | | | | | | |
|---|---|---|---|---|---|---|---|
| | 3 d | 8 d | 16 d | 22d* | 24d | 28d | 35d |
| Imidacloprid | 97.1 | 99.3 | 94.0 | 83.9 | 96.7 | 99.5 | 94.6 |
| Beispiel (I-2) | 96.6 | 100 | 99.7 | 79.6 | 97.0 | 99.2 | 97.8 |

### Beispiel 12 (erfindungsgemäss)

Da sich während des Versuchs (siehe Beispiel 11) nach der 2. Behandlung eine Spinnmilbenpopulation von Panonychus ulmi ( METTUL) aufbaute, wurde diese ebenfalls bonitiert. Die Auswertung erfolgt 28 und 35 Tage nach der ersten Behandlung durch Auszaählung lebender Nymphen auf jeweils 10 Pflanzen. Die Wirksamkeit wird mit Hilfe der Abbott-Formel ermittelt.

| Aufwandmenge (200g/ha Wirkstoff) | Wirksamkeit (%) Abbott gegen METTUL (Nymphen) | | | | |
|---|---|---|---|---|---|
| | 28 d | 35 d | | | |
| Imidacloprid | 13.0 | 7.0 | | | |
| Beispiel (I-2) | 89.8 | 75.5 | | | |

### Beispiel 13 (erfindungsgemäss)

Ca. 10 m² Parzellen mit Tomaten der Sorte "Donald" (Pflanzenwachstumsstadium BBCH 25), werden in drei Replikationen gegen Myzus persicae (MYZUPE)) mit 1000 ml/ha einer Wirkstofflösung enthaltend den Wirkstoff Beispiel (I-2) (200 SL) und zum Vergleich mit 1000 ml/ha des Standards Imidacloprid (200 SL) mittels Dripper mit einer Wasseraufwandmenge von 13333 l/ha behandelt. Die Anwendung erfolgt zweimal mit den oben angegebenen Mengen im Abstand von 8 Tagen*. Die Auswertung erfolgt 4, 7, 13, 21, 29 und 36 Tage nach der ersten Behandlung mittels Auszählung von lebenden Läusen (alle Stadien) an jeweils 10 Pflanzen. Die Wirksamkeit wird mit Hilfe der Abbott-Formel ermittelt.

| Aufwandmenge (200g/ha Wirkstoff) | Wirksamkeit (%) Abbott gegen MYZUPE (gemischte Population) | | | | | |
|---|---|---|---|---|---|---|
| | 4 d | 7 d* | 13 d | 21d | 29d | 36d |
| Imidacloprid | 89.2 | 98.8 | 100 | 100 | 100 | 100 |
| Beispiel (I-2) | 85.8 | 98.8 | 100 | 100 | 100 | 100 |

### Thripse (Thripidae)

Weiterhin ganz besonders bevorzugt ist die Bekämpfung folgender Arten aus der Familie der Thripse (Thripidae) in folgenden Kulturen:

| | |
|---|---|
| Frankliniella occidentalis | in Gemüse wie z.B. Paprika, Tomaten, Gurken, Kohl z.B. Broccoli, Bohnen, Salat, Auberginen, Zucchini, Kürbisse, in Beerenfrüchten, z.B. Erdbeeren, in Melonen z.B. Wassermelonen, Netzmelonen, Cantaloup-Melonen, in Zierpflanzen wie Rosen, Hibiskus, Chrysanthemen sowie in Kartoffeln und in tropischen Kulturen wie z.B. Papayas, Avocado, Baumwolle, Tabak, Coniferen |
| Frankliniella schultzei | |
| Frankliniella fusca | |
| Thrips palmi | in Baumwolle, in Gemüse wie z.B. Paprika, Tomaten, Gurken, Bohnen, Kürbisgewächse, Auberginen, Zucchini, Kohl, Lauch, Zwiebeln, Frühlingszwiebeln, in Beerenfrüchten, in Melonen z.B. Wassermelonen, Netzmelonen, Cantaloup-Melonen, in Zierpflanzen wie z.B. Rosen, Hibiskus, in tropischen Kulturen wie z.B. Papayas, Ananas, Bananen, Kartoffeln, Wein, Baumwolle, Reis, Nüsse |
| Thrips tabaci | |
| Thrips hawaiiensis | |
| Heliothrips haemorrhoidalis | in Gemüse wie z.B. Tomaten, Paprika, Bohnen, Gurken, Kürbisse, Auberginen, in Melonen sowie in Zierpflanzen wie z.B. Rosen, Hibiskus, Azaleen, tropische Kulturen wie Guaven, Zitrus wie z.B. Zitronen, Orangen, Wein, Nüsse wie z.B. Macademia-Nüsse |
| Hercinothrips femoralis | in tropischen Kulturen wie z.B. Bananen, Zierpflanzen, Gemüse wie z.B. Bohnen |
| Hercinothrips bicinctus | |
| Hercinothrips phaseoli | |
| Caliothrips phaseoli | in Gemüse, wie z.B. Bohnen, Zucchini, in tropischen Früchten wie z.B. Avocados |
| Baliothrips biformis | in Reis |
| Anaphothrips obscurus | in Mais, Kohlgemüse wie z.B. Weißkohl, Getreide wie z.B. Weizen |
| Scirthothrips aurantii | in Zitrus wie z.B. Orangen, Zitronen, Grapefruits, Mandarinen, Zierpflanzen, Gemüse wie z.B. Gurken, Tomaten, Bohnen, Auberginen, Kürbisse; Melonen wie Wassermelonen, Cantaloup-Melonen, Gewürze wie Chilli; Tee |
| Scirthothrips dorsalis | |
| Scirthothrips citri | |
| Kakothrips pisivora | in Gemüse wie z.B. Erbsen, Bohnen |

### Beispiel 14 (erfindungsgemäss)

Ca. 12.5 m² Parzellen mit Zwiebeln der Sorte "Dorata di Bologna" (Pflanzenwachstumsstadium BBCH19), werden in drei Replikationen gegen Thrips tabaci (THRITB) mit 1000 ml/ha einer Wirkstofflösung enthaltend den Wirkstoff Beispiel (I-2) (200 SL) und zum Vergleich mit 1000 ml/ha des Standards Imidacloprid (200 SL) mittels Dripper mit einer Wasseraufwandmenge von 12000 l/ha behandelt. Die Anwendung erfolgt zweimal mit den oben angegebenen Mengen im Abstand von 7 Tagen*. Die Auswertung erfolgt 6, 14, 22, 29 und 36 Tage nach der ersten Behandlung mittels Auszählung lebender Thrips - Nymphen an jeweils 20 Pflanzen. Die Wirksamkeit wird mit Hilfe der Abbott-Formel ermittelt.

| Aufwandmenge (200g/ha Wirkstoff) | Wirksamkeit (%) Abbott gegen THRITB (Nymphs) | | | | |
|---|---|---|---|---|---|
| | 6 d* | 14 d | 22 d | 29d | 36d |
| Imidacloprid | 66.3 | 87.8 | 94.8 | 25.0 | 10.3 |
| Beispiel (I-2) | 55.1 | 90.2 | 89.6 | 41.2 | 79.3 |

### Siehe auch Beipiel 10

### Zwergzikaden (Cicadellidae) und Hornzikaden (Delphacidae)

Weiterhin ganz besonders bevorzugt ist die Bekämpfung folgender Arten aus den Familien der Zwergzikaden (Cicadellidae) und Hornzikaden (Delphacidae) in folgenden Kulturen:

| | |
|---|---|
| Empoasca devastans | in Gemüse wie Paprika, Tomaten, Gurken, Kohl z.B. Broccoli, Bohnen, Salat, Auberginen, Zucchini, Kürbisse, Sellerie, Erbsen, in Beerenfrüchten, in Melonen z.B. Wassermelonen, Netzmelonen, Cantaloup-Melonen, in Zierpflanzen wie Rosen, Hibiskus, in Zitrus wie Orangen, Mandarinen, Grapefruits sowie in Kartoffeln und in tropischen Kulturen wie z.B. Papayas, Bananen, Baumwolle, Tee, Wein, Nüsse wie z.B. Erdnüsse, Pecannüsse, |
| Empoasca fabae | |
| Empoasca flavescens | |
| Empoasca kraemeri | |
| Empoasca onukui | |
| Empoasca biguttula | |
| Empoasca vitis | |
| Idioscopus clypealis | in Gemüse wie Paprika, Tomaten, Gurken, Bohnen, Kürbisgewächse, Auberginen, Zucchini, Kohl, in Beerenfrüchten, in Melonen z.B. Wassermelonen, Netzmelonen, Cantaloup-Melonen, in Zierpflanzen, in tropischen Kulturen wie z.B.Mangos, Bananen |
| Idioscopus niveosparsus | |
| Idioscopus nitidulus | |
| Oncometopia fascialis | in Melonen sowie in Zierpflanzen wie z.B. Rosen, Hibiskus, Zitrus wie z.B. Orangen, Nüsse wie Pistazien |
| Oncometopia nigricans | |
| Erythroneura apicalis | in Wein |
| Erythroneura eburnea | |
| Erythroneura elegantulus | |
| Erythroneura variabilis | |
| Homalodisca cougulata | in Zitrus wie Orangen, Mandarinen, Zitronen, Grapefruits, Limetten, Kumquats, Wein |
| Circulifer tenellus | in Gemüse wie z.B. Kürbisse |
| Dalbus maidis | in Gemüse z.B. Buschbohnen |
| Nephotttix cinticeps | in Reis |
| Nilaparvata lugens | in Reis |
| Sogatella furcifera | in Reis |
| Laodelphax striatellus | in Reis |

### Minierfliegen (Agromyzidae)

Weiterhin ganz besonders bevorzugt ist die Bekämpfung folgender Arten aus der Familie der Minierfliegen (Agromyzidae) in folgenden Kulturen:

| | |
|---|---|
| Liriomyza brassicae | in Gemüse wie Paprika, Tomaten, Gurken, Kohl, Bohnen, Salat, Auberginen, Zucchini, Kürbisse, in Melonen z.B. Wassermelonen, Netzmelonen, Cantaloup-Melonen, in Zierpflanzen wie Rosen, Hibiskus, sowie in Kartoffeln, Bohnen |
| Liriomyza bryoniae | |
| Liriomyza cepae | |
| Liriomyza chilensis | |
| Liriomyza hunidobrensis | |
| Liriomyza sativae | |
| Liriomyza trifolii | |
| Liriomyza quadrata | |
| Pegomya hyoscyami | in Gemüse |
| Pegomya spinaciae | |

### Gallmücken (Cecidomyiidae)

Außerdem ganz besonders bevorzugt ist die Bekämpfung folgender Arten aus der Familie der Gallmücken (Cecidomyiidae):
Dasineura brassicae, Dasineura mali, Dasineura piri in Möhren, Knollen-, Wurzel- und Stängelgemüse wie z.B. Spargel, Fruchtgemüse wie z.B. Paprika, Tomaten, Gurken; Kartoffeln, Baumwolle, Kohlgemüse, Kernobst, Gewürze.

Prodiplosis vaccinii, Prodiplosis longifila, Thecodiplosis brachyntera, Thecodiplosis japonensis, Sitodiplosis mosellana, Haplodiplosis equestris in Gemüse wie z. B. Fruchtgemüse (Tomaten, Paprika), Citrus (z. B. Limonen, Orangen, Grapefruits, Clementinen), Getreide (z.B. Weizen, Gerste), Koniferen und Forst. Contarinia lycopersici, Contarinia maculipennis, Contarinia humuli, Contarinia johnsoni, Contarinia nasturti, Contarinia okadai, Contarinia tritici, Contarinia pisi, Contarinia sorghicola, Contarinia medicaginis, Contarinia mali in Gemüse wie z. B. Kohlgemüse, Fruchtgemüse; Getreide wie z. B. Weizen, Sorghum; Kernobst; Hopfen.

### Fruchtfliegen (Tephritidae)

Weiterhin ganz besonders bevorzugt ist die Bekämpfung folgender Arten aus der Familie der Fruchtfliegen (Tephritidae) in folgenden Kulturen:

| | |
|---|---|
| Anastrepha fraterculus | in Gemüse wie z.B. Paprika, Tomaten, Gurken, Bohnen, Auberginen, Zucchini, Kürbisse, in Beerenfrüchten, z.B. Erdbeeren, in Melonen z.B. Wassermelonen, Netzmelonen, Cantaloup-Melonen, in Kernobst, Steinobst, in Zierpflanzen wie Rosen, Hibiskus, Chrysanthemen sowie in Kartoffeln, Wein und in tropischen Kulturen wie z.B. Papayas, Avocado, Guave, Mangos, in Citrus wie z. B. Orangen, Klementinen, Grapefruits |
| Anastrepha ludens | |
| Anastrepha striata | |
| Anastrepha oligua | |
| Anastrepha distineta | |
| Ceratitis capitata | in Baumwolle, in Gemüse wie z.B. Paprika, Tomaten, Gurken, Bohnen, Kürbisgewächse, Auberginen, Zucchini, Kohl, Lauch, Zwiebeln, in Beerenfrüchten, in Melonen z.B. Wassermelonen, Netzmelonen, in Kern- und Steinobst, in Zierpflanzen wie z.B. Rosen, Hibiskus, in tropischen Kulturen wie z.B. Papayas, Kakis Ananas, Bananen, Kartoffeln, Wein, in Citrus wie z. B. Orangen, Klementinen, Grapefruits |
| Ceratitis cosyra | |
| Ceratitis rosa | |
| Dacus oleae | in Gemüse wie z.B. Tomaten, Paprika, Bohnen, Gurken, Kürbisse, Auberginen, in Melonen sowie in Zierpflanzen wie z.B. Rosen, Hibiskus, Azaleen; tropische Kulturen wie Kakis, Guaven, Zitrus wie z.B. Zitronen, Orangen; Wein, Oliven, Beerenfrüchte wie z. B. Erdbeeren |
| Dacus ciliatus | |
| Dacus dorsalis | |
| Dacus cucurbitae | |
| Dacus tyroni | |
| Dacus tsuseonis | |
| Rhagoletis cerasi | in Zitrus wie z.B. Orangen, Zitronen, Grapefruits, Mandarinen, Zierpflanzen, Gemüse wie z.B. Gurken, Tomaten, Bohnen, Auberginen, Kürbisse; Melonen wie Wassermelonen, Cantaloup-Melonen; Kern- und Steinobst; Beerenfrüchte wie z. B. Erdbeeren |
| Rhagoletis completa | |
| Rhagoletis pomonella | |

### Miniermotten (Gracillaridae)

Außerdem ganz besonders bevorzugt ist die Bekämpfung folgender Arten aus der Unterfamilie der Miniermotten (Phyllocnistinae) in folgenden Kulturen:

| | |
|---|---|
| Phyllocnistis citrella | in Zitrus wie Orangen, Klementinen, Grapefruits, Zitronen |
| Lithocolletis ringoniella | in Kern- und Steinobst, Nüssen |
| Lithocolletis crataegella | |
| Lithocolletis coryfoliella | |
| Leucoptera coffeella | in Kaffee |

### Spinnmilben (Tetranychidae), Gallmilben (Eriophydae)

Außerdem ganz besonders bevorzugt ist die Bekämpfung folgender Arten aus der Familie der Spinnmilben (Tetranychidae) und der Gallmilben (Eriophydae) in folgenden Kulturen:

| | |
|---|---|
| Tetranychus urticae | in Gemüse wie Paprika, Tomaten, Auberginen, Gurken, Melonen, Zucchini, Kürbisse, in Zierpflanzen wie Rosen, Azaleen; Hopfen, Tee |
| Tetranychus cinnabarinus | |
| Tetranychus canadensis | |
| Tetranychus pacificus | |
| Tetranychus tumidus | |
| Tetranychus kanzawai | |
| Panonychus ulmi | in Gemüse wie Tomaten, Zucchini, Auberginen, Paprika, Kernobst, Steinobst |
| Pananychus citri | in Zitrus wie Orangen, Klementinen |
| Aculops lapponicus | in Gemüse wie Tomate; Zierpflanzen wie Fuchsien |
| Aculops lycopersici | |
| Aculops pelekassi | |
| Aculops fuchsiae | |

### Siehe auch Beispiel 12

Die in den Beispielen beschriebenen Wirkstoffformulierungen der Standards sind z.T. kommerziell erhältlich, z.T. nach Standardmethoden herstellbar.

Die SL-Formulierungen (050 SL, 200 SL) und die SC-Formulierungen (025 SC, 225 SC) der Verbindung der Formel (I-2) sind analog der in WO 2009/115262 beschriebenen Formulierungen herstellbar.
Herstellung der SG-Formulierung (60.7 SG): (siehe hierzu EP-18167264.3)
56 g der Verbindung I-2 wird zusammen mit
15.5 g Kaliumhydroxid (50%ig)
11.5 g Reax 88B
15 g K₂SO₄
2 g Morwet EFW

in 130 g Wasser unter Rühren gemischt und anschließend mittels Sprühtrocknung (LabPlant Model SprayDryer SD-05, Zulufttemperatur 190°C, Ablufttemperatur 50-60°C, Luftdurchsatz 48 m³/h) getrocknet.

## Patentansprüche

1. Verwendung der Verbindung der Formel (I-2) 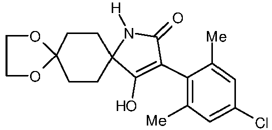 zur Bekämpfung von Insekten und/oder Spinnmilben und/oder Nematoden, wobei die Applikation des Wirkstoffes durch Tröpfchenapplikation auf den Boden geschieht.

2. Verwendung gemäß Anspruch 1, wobei die zu behandelnde Pflanze in einem artifiziellen Wachstumssubstrat angezogen wird.

3. Verwendung gemäß Anspruch 2, wobei das artifizielle Wachstumssubstrat ausgewählt ist aus der Gruppe bestehend aus Steinwolle, Glaswolle, Quarzsand, Kiesel, Blähton und Vermiculit.

4. Verwendung gemäß Anspruch 1, wobei die zu behandelnde Pflanze auf natürlichem Wachstumssubstrat ausgewählt aus Erdreich und Bodenerde angezogen wird.

5. Verwendung gemäß einem oder mehreren der Ansprüche 1 bis 4, wobei die zu behandelnde Pflanze ausgewählt ist aus der Gruppe bestehend aus Baumwolle, Sojabohne, Tabak, Gemüsen, Gewürzen, Zierpflanzen, Koniferen, Zitruspflanzen, Obst, tropischen Kulturen, Nüssen und Wein.

6. Verwendung gemäß einem oder mehreren der Ansprüche 1 bis 5 zur Bekämpfung von Schädlingen aus den Familien der Blasenläuse, Wurzelläuse, Blattflöhe, Napfschildläuse, Deckelschildläuse, Röhrenschildläuse, Schmierläuse, Wollläuse, Mottenschildläuse, Röhrenläuse, Thripse, Zwergzikaden, Hornzikaden, Minierfliegen, Gallmücken, Fruchtfliegen, Miniermotten, Spinnmilben, Gallmilben.

## Claims

1. Use of the compound of the formula (I-2) 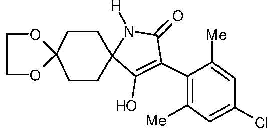 for controlling insects and/or spider mites and/or nematodes, where the application of the active compound is carried out by droplet application to the soil.

2. Use according to Claim 1, where the plant to be treated is grown in an artificial growth substrate.

3. Use according to Claim 2, where the artificial growth substrate is selected from the group consisting of rock wool, glass wool, quartz sand, gravel, expanded clay and vermiculite.

4. Use according to Claim 1, where the plant to be treated is grown on natural growth substrate selected from soil and topsoil.

5. Use according to one or more of Claims 1 to 4, where the plant to be treated is selected from the group consisting of cotton, soya beans, tobacco, vegetables, spices, ornamental plants, conifers, citrus plants, fruit, tropical crops, nuts and grapevines.

6. Use according to one or more of Claims 1 to 5 for controlling pests from the families of the woolly aphids, grape lice, jumping plant lice, soft scales, armoured scale insects, ensign scales, mealy bugs, whiteflies, aphids, thrips, leafhoppers, planthoppers, leaf-miner flies, gall midges, fruit flies, leaf-miner moths, spider mites, gall mites.

## Revendications

1. Utilisation du composé de formule (I-2) 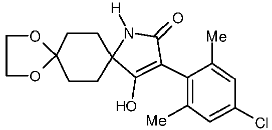 pour la lutte contre des insectes et/ou des acariens et/ou des nématodes, dans laquelle l'application de la substance active s'effectue par application de gouttelettes sur le sol.

2. Utilisation selon la revendication 1, dans laquelle la plante à traiter est cultivée dans un substrat de croissance artificiel.

3. Utilisation selon la revendication 2, dans laquelle le substrat de croissance artificiel est choisi dans le groupe constitué par la laine de roche, la laine de verre, le sable de silice, le gravier, l'argile expansée et la vermiculite.

4. Utilisation selon la revendication 1, dans laquelle la plante à traiter est cultivée sur un substrat de croissance naturel choisi parmi le sol naturel et la terre végétale.

5. Utilisation selon une ou plusieurs des revendications 1 à 4, dans laquelle la plante à traiter est choisie dans le groupe constitué par le coton, le soja, le tabac, les légumes, les épices, les plantes ornementales, les conifères, les agrumes, les cultures fruitières, les cultures tropicales, les cultures de noix et la vigne.

6. Utilisation selon une ou plusieurs des revendications 1 à 5 pour la lutte contre les ravageurs appartenant aux familles des pemphigidae, pucerons des racines, psylles, cochenilles brunes, cochenilles diaspines, pucerons de paradis, cochenilles farineuses, cochenilles laineuses, aleurodes, aphidiens, thrips, cicadelles naines, cicadelles cornues, mouches mineuses, cécidomyies, mouches des fruits, teignes mineuses, acariens tisserands, eriophyides.
